(19) Europäisches Patentamt
European Patent Office
Office européen des brevets

(11) EP 4 186 713 B1

(12) EUROPEAN PATENT SPECIFICATION

(45) Date of publication and mention of the grant of the patent:
**26.02.2025 Bulletin 2025/09**

(21) Application number: **22205016.3**

(22) Date of filing: **02.11.2022**

(51) International Patent Classification (IPC):
***B60C 1/00*** *(2006.01)* ***B60C 11/00*** *(2006.01)*
***B60C 11/03*** *(2006.01)* ***B60C 15/06*** *(2006.01)*
***C08K 3/04*** *(2006.01)*

(52) Cooperative Patent Classification (CPC):
(C-Sets available)
**B60C 11/0304; B60C 1/0016; B60C 11/0066; B60C 11/033; B60C 15/0607; C08C 19/22; C08C 19/44;** B60C 2011/0016 (Cont.)

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021 JP 2021192032**

(43) Date of publication of application:
**31.05.2023 Bulletin 2023/22**

(73) Proprietor: **Sumitomo Rubber Industries, Ltd.**
**Kobe-shi, Hyogo-ken 651-0072 (JP)**

(72) Inventor: **MIKI, Naoyuki**
**Kobe-shi 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 0 864 446**
**EP-A1- 1 308 319**
**EP-A1- 1 619 048**
**EP-A1- 3 434 498**
**WO-A1-00/37270**
**GB-A- 1 588 575**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/06, C08L 9/00, C08L 25/16, C08L 91/00, C08L 91/06, C08K 3/04, C08K 5/09, C08K 5/18, C08K 3/22, C08K 3/06, C08K 5/47;**
**C08L 9/06, C08L 25/16, C08L 9/00, C08L 7/00, C08L 91/00, C08L 91/06, C08K 3/04, C08K 5/09, C08K 5/18, C08K 3/22, C08K 3/06, C08K 5/47;**
**C08L 9/06, C08L 25/16, C08L 9/00, C08L 9/06, C08L 7/00, C08L 91/00, C08L 91/06, C08K 3/04, C08K 5/09, C08K 5/18, C08K 3/22, C08K 3/06, C08K 5/47;**
**C08L 9/06, C08L 25/16, C08L 9/00, C08L 9/06, C08L 91/00, C08L 91/06, C08K 3/04, C08K 5/09, C08K 5/18, C08K 3/22, C08K 3/06, C08K 5/47;**
**C08L 15/00, C08L 9/00, C08L 25/16, C08L 91/00, C08L 91/06, C08K 3/04, C08K 5/09, C08K 5/18, C08K 3/22, C08K 3/06, C08K 5/47;**
C08F 236/06, C08F 212/08

## Description

[TECHNICAL FIELD]

The present invention relates to a pneumatic tire, more particularly to a pneumatic tire with improved grip performance during high-speed turning.

[BACKGROUND ART]

Pneumatic tires (hereinafter, also simply referred to as "tires") are required to have high braking performance (grip performance) from the viewpoint of safety, and various techniques have been proposed for improving grip performance (for example, Patent Documents 1 to 3).

Further prior art pneumatic tires are disclosed in the following documents GB 1 588 575 A, EP 1 308 319 A1, EP 0 864 446 A1, WO 00 / 37270 A1 and EP 1 619 048 A1.

In particular, with the development of highways in recent years, there is an increasing demand for improved grip performance when turning at high speeds under the circumstances where it is not uncommon to travel long distances on highways.

[PRIOR ART DOCUMENT]

[PATENT DOCUMENT]

Patent Document 1: JP-A-2011-93386.
Patent Document 2: JP-A-2013-79017
Patent Document 3: JP-A-2016-37100

[SUMMARY OF THE INVENTION]

[PROBLEMS TO BE SOLVED BY THE INVENTION]

In view of the above circumstances, an object of the present invention is to provide a pneumatic tire having sufficiently improved grip performance at high-speed turning.

[MEANS FOR SOLVING PROBLEMS]

The discloser has diligently studied the solution of the problem, found that the problem can be solved by the invention described below, and completed the present invention.

The present invention provides

a pneumatic tire that specifies the tire mounting direction when mounted on a vehicle, wherein
the cap rubber layer on the outermost layer of the tread is divided in the tire width direction, wherein the cap rubber layer is composed of an outer cap rubber layer and an inner cap rubber layer, wherein the outer cap rubber layer is the cap rubber layer located on the outside of the vehicle, and the inner cap rubber layer is the cap rubber layer located inside the vehicle,
the cap rubber layer located on the outside of the vehicle is formed of a rubber composition containing 25% by mass or less of styrene in the rubber component and having a glass transition temperature of -18°C or higher, and
wherein the acetone-extracted content in the cap rubber layer located on the outside of the vehicle is 20% by mass or more,
wherein the styrene content (mass%) is determined from the refractive index according to JIS K6383 (1995),
wherein a content of carbon black in the rubber composition forming the inner cap rubber layer is 3 to 30 parts by mass, when the carbon black content ratio in the cap rubber layer located on the outside of the vehicle is $C_{OUT}$ (mass%) and the ground contact area ratio is $L_{OUT}$, and the carbon black content ratio in the cap rubber layer located inside the vehicle is $C_{IN}$ (mass%) and the ground contact area ratio is $L_{IN}$, the following Formula 1 and Formula 2 are satisfied. It is a characteristic pneumatic tire.

$$C_{IN} < C_{OUT} \qquad \text{(Formula 1)}$$

$$0 \leq (C_{OUT} \times L_{OUT}) - (C_{IN} \times L_{IN}) \qquad \text{(Formula 2)}$$

[EFFECT OF THE INVENTION]

According to the present invention, it is possible to provide a pneumatic tire having sufficiently improved grip performance at high-speed turning.

[BRIEF DESCRIPTION OF THE DRAWINGS]

[FIG. 1] A schematic cross-sectional view showing a configuration of a tire according to an embodiment of the present invention.

[FIG. 2] A schematic cross-sectional view showing a configuration example of a bead portion of a tire according to an embodiment of the present invention.

[EMBODIMENT FOR CARRYING OUT THE INVENTION]

[1] Features of the tire

First, the characteristics of the tire will be described.

1. Overview

The tire is a pneumatic tire in which the mounting direction of the tire when mounted on a vehicle is specified, and the cap rubber layer of the outermost layer of the tread portion is divided in the tire width direction, wherein the cap rubber layer is composed of an outer cap rubber layer and an inner cap rubber layer, wherein the outer cap rubber layer is the cap rubber layer located on the outside of the vehicle, and the inner cap rubber layer is the cap rubber layer located inside the vehicle. In the tire according to the present disclosure, the cap rubber layer (outer cap rubber layer) located on the outside of the vehicle is formed from a rubber composition containing 25% by mass or less of styrene in the rubber component, and having the glass transition temperature (Tg) of -18°C or higher. The acetone-extracted content in the cap rubber layer located on the outside of the vehicle is 20% by mass or more. A content of carbon black in the rubber composition forming the inner cap rubber layer is 3 to 30 parts by mass. Further, in the tire according to the present disclosure, when the carbon black content ratio in the outer cap rubber layer is $C_{OUT}$ (mass%) and the ground contact area ratio is $L_{OUT}$, and the carbon black content ratio in in the cap rubber layer located inside the vehicle (inner cap rubber layer) is $C_{IN}$ (mass%) and the ground contact area ratio is $L_{IN}$, the following (Formula 1) and (Formula 2) are satisfied.

$$C_{IN} < C_{OUT} \qquad \text{(Formula 1)}$$

$$0 \leq (C_{OUT} \times L_{OUT}) - (C_{IN} \times L_{IN}) \qquad \text{(Formula 2)}$$

By having these characteristics, as will be described later, it is possible to provide a pneumatic tire having sufficiently improved grip performance at the time of high-speed turning.

2. Mechanism of effect manifestation in tires

The mechanism of effect manifestation for the above-mentioned effect in the tire is considered as follows.

When traveling straight, the inner part of the tread touches the road surface with high ground pressure, while when turning, the tires mounted on the vehicle tend to receive lateral force and the outside of the tread tends to be the ground contact surface. This tendency becomes remarkable when driving at high speeds.

Therefore, in the tire as described above, the outer cap rubber layer is formed from a rubber composition containing styrene in an amount of 25% by mass or less in the rubber component and having a Tg of -18°C or more to

improve the grip performance during high-speed turning.

That is, by forming the outer cap rubber layer with the styrene content in the rubber component of the rubber composition set to 25% by mass or less, the interaction and cohesive action between the styrene portions are weakened in the outer cap rubber layer, and, since the polymer molecules can be flexibly moved to increase the contact area between the road surface and the polymer, it is considered that the grip performance during high-speed turning can be improved.

At this time, since a certain amount of styrene is contained in the rubber component, the styrene portions in the polymer that moves flexibly also tend to generate heat due to friction with each other. As a result, the movement of the polymer molecules described above is further promoted, and the grip performance during high-speed turning can be further improved.

Further, since the rubber composition having a Tg as high as -18°C or higher tends to generate heat, it is possible to further promote the movement of polymer molecules and improve the grip performance during high-speed turning.

The glass transition temperature (Tg) described above of the rubber component can be obtained from the temperature distribution curve of tan $\delta$ measured using a viscoelasticity measuring device such as the "Iplexer (registered trademark)" series manufactured by GABO. Specifically, the temperature corresponding to the largest tan $\delta$ value (tan $\delta$ peak temperature) in the obtained tan $\delta$ temperature distribution curve is defined as the glass transition temperature (Tg). It is more preferably -16°C or higher, and even more preferably -15°C or higher. On the other hand, the upper limit is not particularly limited, but is preferably 0°C or lower, more preferably -8°C or lower, and even more preferably -10°C or lower.

Further, the Tg described above can be appropriately adjusted by the ratio of the rubber component contained in the rubber composition, the amount of styrene in the rubber component, the plasticizer component, and the like. The Tg can be raised by increasing the amount of styrene in the rubber component, using a resin or the like having a high Tg as the plasticizer component, or the like.

Further, when the carbon black content ratio in the outer cap rubber layer is $C_{OUT}$ (mass%) and the ground contact area ratio is $L_{OUT}$, and the carbon black content ratio in the inner cap rubber layer is $C_{IN}$ (mass%) and the ground contact area ratio is $L_{IN}$, the following (Formula 1) and (Formula 2) are satisfied.

$$C_{IN} < C_{OUT} \qquad \text{(Formula 1)}$$

$$0 \leq (C_{OUT} \times L_{OUT}) - (C_{IN} \times L_{IN}) \qquad \text{(Formula 2)}$$

By $C_{IN} < C_{OUT}$, that is, by containing more carbon black in the outer cap rubber layer than in the inner cap rubber layer, when a load is applied to the outer cap rubber layer at high-speed turning, the temperature of the outer cap rubber layer tends to rise due to the friction between the carbon black and the polymer to further promote the movement of the polymer and improve the grip performance during high-speed turning.

On the other hand, in the inner cap rubber layer, since the amount of carbon black is small, heat generation is suppressed, the rigidity of the inner cap rubber layer that easily touches the ground at the initial stage of turning is ensured, and it can be made easier to apply a load to the outer cap rubber layer side during turning. As a result, the temperature on the outer cap rubber layer side tends to rise, the movement of the polymer can be further promoted, and the grip performance during high-speed turning can be improved.

The specific difference between $C_{OUT}$ and $C_{IN}$ ($C_{OUT}$ - $C_{IN}$) is preferably 20% by mass or more, and more preferably 30% by mass or more. On the other hand, the upper limit is not particularly limited, but is preferably 40% by mass or less, and more preferably 38% by mass or less.

In addition, since the size of the ground contact area ratio is related to the size of the area where the polymer and the road surface contact during high-speed turning, it is considered that increasing the ground contact area ratio of the outer cap rubber layer can also increase the contact area between the polymer and the road surface, and work in an advantageous way on improving grip performance.

The specific difference ($L_{OUT}$ - $L_{IN}$) between the ground contact area ratio $L_{OUT}$ in the outer cap rubber layer and the ground contact area ratio $L_{IN}$ in the inner cap rubber layer is preferably 0 or more, and more preferably 0.15 or more. On the other hand, the upper limit is not particularly limited, but is preferably 0.80 or less, and more preferably 0.70 or less.

The discloser has conducted experiments and studies on the preferable relationship between the carbon black content and the size of the ground contact area ratio between the outer cap rubber layer and the inner cap rubber layer, and, as a result, has found $0 \leq [(C_{OUT} \times L_{OUT}) - (C_{IN} \times L_{IN})]$ (Formula 2) was to be satisfied. Note that, $[(C_{OUT} \times L_{OUT}) - (C_{IN} \times L_{IN})]$ is more preferably 8 or more, and further preferably 10 or more. On the other hand, the upper limit is not particularly limited, but is preferably 50 or less, more preferably 45 or less, and further preferably 35 or less.

In the above description, the content of carbon black indicates the content ratio (mass%) of carbon black to the entire rubber composition, and can be calculated from thermal analysis or the like.

Further, in the above description, the ground contact area ratio can be obtained from the regular rim, the regular internal pressure, the ground contact shape under the regular load condition, and the divided position of each cap rubber

layer.

Specifically, after assembling the tire to the regular rim, applying regular internal pressure and allowing it to stand still at 25°C for 24 hours, apply black ink to the tire tread surface, apply a regular load and press it against thick paper (camber angle is 0°.) to transfer the ink to paper to obtain the ground contact shape. The tire is rotated by 72 ° in the circumferential direction and the ink transferred is conducted at five places. That is, the ground contact shape is obtained 5 times.

The ground contact area ratio ($L_{OUT}$) in the outer cap rubber layer and the ground contact area ratio ($L_{IN}$) in the inner cap rubber layer are obtained by calculating the ratio of the area occupied by the cap rubber layer in the average areas of the five ground contact shapes (ink portions) transferred on the thick paper.

$L_{OUT}$ = average value of the ground contact area of the outer cap rubber --> layer / average value of the entire ground contact area

$L_{IN}$ = average value of the ground contact area of the inner cap rubber layer / average value of the entire ground contact area

Here, the "regular rim" is a rim defined for each tire in the standard system including the standard on which the tire is based. For example, in the case of JATTA (Japan Automobile Tire Association), standard rims in applicable sizes described in "JATTA YEAR BOOK", in the case of ETRTO (The European Tire and Rim Technical Organization), "Measuring Rim" described in "STANDARDS MANUAL", and in the case of TRA (The Tire and Rim Association, Inc.), "Design Rim" described in "YEAR BOOK" mean the "regular rim". In the case of tires that are not specified in the standard, it means a rim having the smallest rim diameter, and then having the narrowest width among the rims which can be assembled and the internal pressure can be maintained, that is, rims not causing air leakage between the rim and the tire.

The "regular internal pressure" is the air pressure defined for each tire by the standard, and means the maximum air pressure in the case of JATTA, the maximum value described in the table "TIRE LOAD LIMITS AT VARIOUS COLD INFLATION PRESSURES" in the case of TRA, and "INFLATION PRESSURES" in the case of ETRTO.

The "regular load" is the load defined for each tire by each of the above standards in the standard system including the standard on which the tire is based, and refers to the maximum mass that can be loaded on the tire. It means the maximum load capacity in the case of JATTA, the maximum value described in the table "TIRE LOAD LIMITS AT VARIOUS COLD INFLATION PRESSURES" in the case of TRA, and "LOAD CAPACITY" in the case of ETRTO.

The width of each cap rubber layer when obtaining the ground contact area of each cap rubber layer can be calculated from the length of each cap rubber layer in the tire width direction on the outermost surface portion of the tread with the bead portion adjusted to the regular rim width in the radial cross section of the tire.

[2] More preferable aspect of the tire.

The tire can obtain a larger effect by adopting the following aspects.

1. Boundary surface between the outer cap rubber layer and the inner cap rubber layer

FIG. 1 is a schematic cross-sectional view showing a configuration of a tire. In FIG. 1, the left side of the paper is the inside and the right side is the outside, 5 is the carcass, 6 is the inner, 23 is the inner ground contact end of the cap rubber layer 21, 24 is the outer ground contact end of the cap rubber layer 21, 26 is the belt, 31 is the sidewall, and C is the tire equatorial plane.

As shown in FIG. 1, the tire 1 includes a tread portion 2, a sidewall portion 3, and a bead portion 4. The tread portion 2 has a cap rubber layer 21 as an outermost layer and a base rubber layer 25 as an inner layer thereof. In the present disclosure, the cap rubber layer 21 is composed of an outer cap rubber layer 21a and an inner cap rubber layer 21b. The outer cap rubber layer 21a and the inner cap rubber layer 21b are joined and integrated at a boundary surface 22.

The boundary surface 22 is preferably formed in a predetermined region D inside from the equatorial plane C, specifically, the region of 5% or more, 80% of the distance $D_{IN}$ from the inner ground contact end 23 of the cap rubber layer 21 to the equatorial plane C. As a result, the balance between the frictional force and the reaction force in the tread portion is appropriately exhibited, and the grip performance can be further improved.

2. Particle diameter of carbon black contained in the outer cap rubber layer

The particle diameter (average primary particle diameter) of carbon black contained in the outer cap rubber layer is preferably 22 nm or less in consideration of the ease of friction with the polymer described above.

The average primary particle diameter can be calculated by directly observing carbon black taken out from the rubber composition cut out from the tire using an electron microscope (TEM) or the like, calculating the equal cross-sectional area diameter from the area of each carbon black particle thus obtained and by obtaining the average value.

3. Styrene content in the rubber component of the outer cap rubber layer

As described above, the rubber component of the outer cap rubber layer contains 25% by mass or less of styrene. The content is more preferably 20% by mass or less, and further preferably 15% by mass or less. On the other hand, as the lower limit, it is preferably 4% by mass or more, more preferably 5% by mass or more, and further preferably 6% by mass or more.

The styrene content in the rubber component described above is the mass% of the styrene portion in 100% by mass of the rubber component. In the vulcanized rubber composition, it can be calculated by obtaining the amount of the styrene contained in the rubber component after extraction with acetone.

Further, the above-mentioned styrene content may be obtained when a single styrene-containing polymer is used or a plurality of styrene-containing polymers are used. When it is obtained from a plurality of styrene-containing polymers, it can be determined by the sum of the products of the styrene content (% by mass) and the blending amount of the polymer with respect to 100% by mass of the rubber component in each polymer.

As a result, heat generation can be obtained while sufficiently promoting the flexible movement of the polymer molecule, so that the grip performance during high-speed turning can be further improved.

4. Acetone extract from the outer cap rubber layer (AE)

The acetone-extracted content (AE) of the outer cap rubber layer is 20% by mass or more, more preferably 22% by mass or more, from the viewpoint of exhibiting stable grip performance during high-speed turning. On the other hand, the upper limit is not particularly limited, but is preferably 35% by mass or less, more preferably 33% by mass or less, and further preferably 30% by mass or less.

The acetone-extracted content (AE) can be considered as an index showing the amounts of components that are easily transferred such as a softener in the rubber composition, and can also be considered as an index showing the softness of the rubber composition. Therefore, with the outer cap rubber layer having a large amount of AE, a sufficient area for the tire to come into contact with the road surface can be secured, and stable grip performance can be exhibited.

The acetone-extracted content (AE) can be measured in accordance with JIS K 6229: 2015. Specifically, AE (mass%) can be obtained by immersing the vulcanized rubber test piece cut out from the measurement site in acetone for a predetermined time to obtain the mass reduction rate (%) of the test piece.

Further, the above-mentioned acetone-extracted content can be appropriately changed by changing the blending ratio of the plasticizer in the rubber composition.

5. Sulfur content in the outer cap rubber layer and the inner cap rubber layer (TS)

The sulfur content $TS_{OUT}$ (mass%) in the outer cap rubber layer is smaller than the sulfur content $TS_{IN}$ (mass%) in the inner cap rubber layer. That is, $TS_{OUT} < TS_{IN}$ is preferable.

By using sulfur as a vulcanizing agent, the molecular chains of the rubber components are chemically bonded and easily crosslinked, so that the rigidity of the rubber can be maintained even at high temperatures. Therefore, when the sulfur content $TS_{OUT}$ in the outer cap rubber layer is smaller than the sulfur content $TS_{IN}$ in the inner cap rubber layer, the inner cap rubber layer is more likely to form crosslinks due to sulfur, and sufficient rigidity can be obtained by the inner cap rubber layer. As a result, a load is easily applied to the outer cap rubber layer during turning, and the movement of the polymer molecules in the cap rubber layer is promoted, so that better turning performance can be obtained.

This TS is measured by using an oxygen combustion flask method based on JIS-K6233, or the like, with respect to the test piece cut out from the measurement site.

6. Externally pasted apex

It is preferable that the tire is provided with an externally pasted apex on the bead portion.

FIG. 2 is a schematic cross-sectional view showing a configuration example of a bead portion of a tire according to an embodiment, wherein (a) shows an example in which an externally pasted apex is not provided on the outside of a carcass, and (b) shows an example of having an externally pasted apex on the outside of the carcass. In FIG. 2, 41 is a bead core, 42 is a bead apex, 43 is a clinch, and 44 is a chafer.

By providing the externally pasted apex 45 on the outside of the carcass 5, the rigidity of the bead portion 4 is sufficiently maintained even if a large outward force acts on the bead portion 4 during high-speed turning, and the

deformation of the outer cap rubber layer is prevented a sufficient ground contact area is secured, and a sufficient grip function can be maintained.

[3] Embodiment

Hereinafter, the present invention will be specifically described based on the embodiments.

1. Rubber composition

The rubber composition forming the tread portion (outer cap rubber layer and inner cap rubber layer) of the tire can be obtained by appropriately adjusting the type and amount of various compounding materials including the rubber components, fillers, softeners, vulcanizers, vulcanization accelerators and the like described below.

(1) Compounding material

(a) Rubber component

In the present embodiment, the rubber component is not particularly limited, and a diene rubber such as isoprene rubber, butadiene rubber (BR), styrene butadiene rubber (SBR), and nitrile rubber (NBR); a butyl rubber such as butyl rubber; a thermoplastic elastomer such as styrene-butadienestyrene block copolymer (SBS) and styrene-butadiene copolymer (SB); and the like, which are rubbers (polymers) generally used in the manufacture of tires, can be used.

The outer cap rubber layer contains any one of styrene-based polymers such as SBR, SBS, and SB, and preferably contains SBR. Further, these styrene-based polymers may be used in combination with other rubber components. For example, the combined use of SBR and BR, or the combined use of SBR and BR and isoprene-based rubber is preferable.

On the other hand, the rubber component used in the inner cap rubber layer is not particularly limited, but preferably contains any one of isoprene-based rubber, SBR and BR, and it is more preferable to use two or more of these in combination.

(a1) SBR

The weight average molecular weight of SBR is, for example, more than 100,000 and less than 2 million. The rubber composition forming the outer cap rubber layer has a styrene content of 25% by mass or less in the rubber component as described above. At that time, the styrene content in the SBR component is not particularly limited, but is preferably 30% by mass or less, more preferably 25% by mass or less, and further preferably 20% by mass or less. On the other hand, as the lower limit, it is preferably 3% by mass or more, more preferably 5% by mass or more, and further preferably 8% by mass or more.

On the other hand, in the rubber composition forming the inner cap rubber layer, the styrene content in the rubber component is not particularly limited, and, for example, is preferably more than 10% by mass, more preferably more than 20% by mass. On the other hand, it is preferably less than 40% by mass, more preferably less than 35% by mass. At that time, the styrene content in the SBR component is preferably, for example, more than 15% by mass, more preferably more than 20% by mass. On the other hand, it is preferably less than 50% by mass, more preferably less than 45% by mass.

The vinyl bond amount (1,2-bonded butadiene unit amount) of SBR is, for example, more than 5 mol% and less than 70 mol% in both the rubber composition forming the outer cap rubber layer and the rubber composition forming the inner cap rubber layer. The structure identification of SBR (measurement of styrene content and vinyl bond content) can be performed using, for example, an apparatus of the JNM-ECA series manufactured by JEOL Ltd.

The content of SBR in 100 parts by mass of the rubber component is preferably 60 parts by mass or more, more preferably 70 parts by mass or more, and further preferably 75 parts by mass or more in the rubber composition forming the outer cap rubber layer. On the other hand, in the rubber composition forming the inner cap rubber layer, it is preferably 45 parts by mass or more, and more preferably 75 parts by mass or more.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. Further, a hydrogenated SBR obtained by hydrogenating the butadiene portion in the SBR may be used, and the hydrogenated SBR may be obtained by subsequently hydrogenating the BR portion in the SBR, or by copolymerizing styrene, ethylene and butadiene to obtain a similar structure.

The modified SBR may be any SBR having a functional group that interacts with a filler such as silica. For example, a terminal modified SBR in which at least one end of the SBR is modified with a compound having the above functional group (modifying agent) (a terminal modified SBR having the above functional group at the terminal), a main

chain modified SBR having the above functional group on the main chain, and a main chain terminal modified SBR having the above functional group on the main chain and the terminal (for example, a main chain terminal modified SBR having the above functional group on the main chain and having at least one end modified with the above modifying agent), and a terminal modified SBR which is modified (coupled) with a polyfunctional compound having two or more epoxy groups in the molecule, and in which a hydroxyl group and an epoxy group has been introduced, can be mentioned.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group and an epoxy group. These functional groups may have a substituent.

Further, as the modified SBR, for example, an SBR modified with a compound (modifying agent) represented by the following formula can be used.

[Chemical 1]

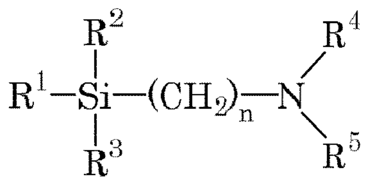

In the formula, R

. $^1$, $R^2$ and $R^3$ are the same or different and represent an alkyl group, an alkoxy group, a silyloxy group, an acetal group, a carboxyl group (-COOH), a mercapto group (-SH) or a derivative thereof. $R^4$ and $R^5$ are the same or different and represent hydrogen atoms or alkyl groups. $R^4$ and $R^5$ may be combined to form a ring structure with nitrogen atoms. n represents an integer.

As the modified SBR modified by the compound (modifying agent) represented by the above formula, SBR in which the polymerization end (active end) of a solution-polymerized styrene-butadiene rubber (S-SBR) is modified by the compound represented by the above formula (modified SBR described in JP-A-2010-111753) can be used.

An alkoxy group (preferably an alkoxy group having 1 to 8 carbon atoms, and more preferably an alkoxy group having 1 to 4 carbon atoms) is suitable as $R^1$, $R^2$ and $R^3$. As $R^4$ and $R^5$, an alkyl group (preferably an alkyl group having 1 to 3 carbon atoms) is suitable. n is preferably 1 to 5, more preferably 2 to 4, and further preferably 3. Further, when $R^4$ and $R^5$ are combined to form a ring structure together with a nitrogen atom, a 4 to 8-membered ring is preferable. The alkoxy group also includes a cycloalkoxy group (cyclohexyloxy group, etc.) and an aryloxy group (phenoxy group, benzyloxy group, etc.).

Specific examples of the above modifying agents include 2-dimethylaminoethyltrimethoxysilane, 3-dimethylaminopropyltrimethoxysilane, 2-dimethylaminoethyltriethoxysilane, 3-dimethylaminopropyltriethoxysilane, and 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include polyglycidyl ethers of polyhydric alcohols such as ethyleneglycol diglycidyl ether, glycerin triglycidyl ether, trimethylolethane-triglycidyl ether and trimethylolpropane triglycidyl ether;

polyglycidyl ether of aromatic compound having two or more of phenol group such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4'-diglycidyldiphenylamine and 4,4'-diglycidyldibenzyl-methylamine;
diglycidylamino compounds such as diglycidylaniline, N, N'-diglycidyl-4-glycidyloxyaniline, diglycidylorthotoluidine, tetraglycidylmetaxylene diamine , tetraglycidylaminodiphenylmethane, tetraglycidyl-p-phenylenediamine, diglycidylaminomethylcyclohexane and tetraglycidyl-1,3-bisaminomethyl cyclohexane;
amino group-containing acid chlorides such as bis-(1-methylpropyl) carbamate chloride, 4-morpholincarbonyl chloride, 1-pyrrolidincarbonyl chloride, N, N-dimethylcarbamate chloride and N, N-diethylcarbamate chloride;
epoxy group-containing silane compounds such as 1,3-bis-(glycidyloxypropyl)tetramethyldisiloxane and (3-glycidyloxypropyl) - pentamethyldisiloxane;

sulfide group-containing silane compounds such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3- (tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;

N-substituted aziridine compound such as ethyleneimine and propyleneimine;

alkoxysilanes such as methyltriethoxy silane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane andN, N-bis (trimethylsilyl) aminoethyltriethoxysilane;

(thio) benzophenone compounds having an amino group and / or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone and N, N, N', N'-bis-(tetraethylamino) benzophenone;

benzaldehyde compounds having an amino group and / or a substituted amino group such as 4-N, N-dimethylaminobenzaldehyde, 4-N, N-diphenylaminobenzaldehyde and 4-N, N-divinylamino benzaldehyde; N-substituted pyrrolidone such as N-methyl-2-pyrrolidone, N-vinyl-2-pyrrolidone, N-phenyl-2-pyrrolidone, N-t-butyl-2-pyrrolidone and N-methyl-5-methyl-2-pyrrolidone N-substituted piperidone such as N-methyl-2-piperidone, N-vinyl-2-piperidone and N-phenyl-2-piperidone; and

N-substituted lactams such as N-methyl-ε-caprolactam, N-phenyl-ε-caprolactam, N-methyl-ω-laurilolactam, N-vinyl-ω-laurillolactam, N-methyl-β-propiolactam and N-phenyl-β-propiolactam. In addition to the above, N, N-bis- (2,3-epoxypropoxy) -aniline, 4,4-methylene-bis- (N, N-glycidyl-aniline), tris-(2,3-epoxypropyl)-1,3,5-triazine-2,4,6-triones, N,N-diethylacetamide, N-methylmaleimide, N, N-diethylurea, 1,3-dimethylethyleneurea , 1,3-divinylethyleneurea, 1,3-diethyl-2-imidazolidinone, 1-methyl-3-ethyl-2-imidazolidinone, 4-N,N-dimethylaminoacetophen, 4-N,N-diethylaminoacetophenone, 1,3-bis (diphenylamino)-2-propanone, 1,7-bis (methylethylamino)-4-heptanone, and the like can be mentioned also. The modification with the above compound (modifying agent) can be carried out by a known method.

As the SBR, for example, SBR manufactured and sold by Sumitomo Chemical Co., Ltd., JSR Corporation, Asahi Kasei Co., Ltd., Nippon Zeon Corporation, etc. can be used. The SBR may be used alone or in combination of two or more.

(a2) BR

Both the rubber compositions forming the outer cap rubber layer and the inner cap rubber layer may further contain BR, if necessary. In this case, in the rubber composition forming the outer cap rubber layer, the content of BR in 100 parts by mass of the rubber component is preferably more than 15 parts by mass, more preferably more than 20 parts by mass. On the other hand, it is preferably less than 35 parts by mass, and more preferably less than 30 parts by mass. In the rubber composition forming the inner cap rubber layer, the content of BR is preferably more than 10 parts by mass, more preferably more than 15 parts by mass. On the other hand, it is preferably less than 30 parts by mass, and more preferably less than 25 parts by mass.

The weight average molecular weight of BR is, for example, more than 100,000 and less than 2 million. The vinyl bond content of BR is, for example, more than 1% by mass and less than 30% by mass. The cis amount of BR is, for example, more than 1% by mass and less than 98% by mass. The amount of transformer of BR is, for example, more than 1% by mass and less than 60% by mass.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectroscopy.

As the BR, for example, products manufactured by Ube Industries, Ltd., JSR Corporation, Asahi Kasei Corporation, and Nippon Zeon Corporation can be used.

(a3) Isoprene-based rubber

Both the rubber compositions forming the outer cap rubber layer and forming the inner cap rubber layer may further contain isoprene-based rubber, if necessary. In this case, the content of the isoprene-based rubber in 100 parts by mass of the rubber component is preferably more than 20 parts by mass and less than 35 parts by mass.

Examples of the isoprene-based rubber include natural rubber (NR), isoprene rubber (IR), reformed NR, modified NR, modified IR and the like.

As the NR, for example, SIR20, RSS#3, TSR20 and the like, which are common in the tire industry, can be used. The IR is not particularly limited, and for example, an IR2200 or the like, which is common in the tire industry, can be used. Examples of the reformed NR include deproteinized natural rubber (DPNR), ultra-purity natural rubber (UPNR), and the like; examples of the modified NR include epoxidized natural rubber (ENR), hydrogenated natural rubber (HNR), grafted natural rubber, and the like; and specific examples of the modified IR include epoxidized isoprene rubber, hydrogenated isoprene rubber, grafted isoprene rubber and the like. These may be used alone or in combination of two or more.

(a4) Other rubber components

Further, as another rubber component, rubber (polymer) generally used in the production of tires such as nitrile rubber (NBR) may be contained.

(b) Compounding materials other than rubber components

(b1) Filler

In the present embodiment, the rubber composition preferably contains a filler. Specific examples of the filler include carbon black, silica, graphite, calcium carbonate, talc, alumina, clay, aluminum hydroxide, mica and the like.

(i) Carbon black

The rubber composition preferably contains carbon black. In this case, from the viewpoint of improving the grip performance during high-speed turning by the outer cap rubber layer while suppressing heat generation and ensuring rigidity by the inner cap rubber layer, the content ratio of carbon black in the outer cap rubber layer should be higher than the content ratio in inner cap rubber layer.

The specific content ratio of carbon black with respect to 100 parts by mass of the rubber component is preferably 70 parts by mass or more and 135 parts by mass or less, more preferably 75 parts by mass or more and 130 parts by mass or less in the rubber composition forming the outer cap rubber layer. According to the present invention, the specific content ratio of carbon black with respect to 100 parts by mass of the rubber component is 3 parts by mass or more and 30 parts by mass or less, more preferably 10 parts by mass or more and 25 parts by mass or less in the rubber composition forming the inner cap rubber layer.

The carbon black is not particularly limited, and it includes furnace black (furness carbon black) such as SAF, ISAF, HAF, MAF, FEF, SRF, GPF, APF, FF, CF, SCF and ECF; acetylene black (acetylene carbon black); thermal black (thermal carbon black) such as FT and MT; channel black (channel carbon black) such as EPC, MPC and CC; and the like. These may be used alone or in combination of two or more.

The CTAB (Cetyl Tri-methyl Ammonium Bromide) specific surface area of carbon black is preferably 130 $m^2/g$ or more, more preferably 160 $m^2/g$ or more, and further preferably 170 $m^2/g$ or more. On the other hand, it is preferably 250 $m^2/g$ or less, more preferably 200 $m^2/g$ or less. The CTAB specific surface area is a value measured according to ASTM D3765-92.

It is preferable to use carbon black having a particle diameter of 22 nm or less as the rubber composition forming the outer cap rubber layer. By using carbon black having a small particle diameter and a large CTAB specific surface area, it becomes possible to increase the contact frequency with polymer and improve the grip performance during high-speed turning.

The specific carbon black is not particularly limited, and examples thereof include N134, N110, N220, N234, N219, N339, N330, N326, N351, N550, and N762. Commercially available products, for example, manufactured by Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc., can be used. These may be used alone or in combination of two or more.

(ii-1) Silica

The rubber composition forming the inner cap rubber layer preferably contains silica together with a silane coupling agent from the viewpoint of improving rigidity while suppressing heat generation during high-speed running. If necessary, silica may be contained in the outer cap rubber layer.

The BET specific surface area of silica is preferably more than 140 $m^2/g$, more preferably more than 160 $m^2/g$, from the viewpoint of obtaining good durability performance. On the other hand, from the viewpoint of obtaining good rolling resistance during high-speed running, it is preferably less than 250 $m^2/g$, and more preferably less than 220 $m^2/g$. The above-mentioned BET specific surface area is the value of $N_2SA$ measured by the BET method according to ASTM

D3037-93.

When silica is used as the filling reinforcing agent, the content of silica with respect to 100 parts by mass of the rubber component is, for example, preferably 60 parts by mass or more and 180 parts by mass or less, more preferably 70 parts by mass or more and 120 parts by mass or less, and further preferably 75 parts by mass or more and 85 parts by mass or less.

Examples of silica include dry method silica (anhydrous silica) and wet method silica (hydrous silica). Of these, wet method silica is preferable because it has a large number of silanol groups. Further, silica made of hydrous glass or the like as a raw material, silica made of a biomass material such as rice husks as a raw material, or the like may be used.

As the silica, for example, products manufacture by Degussa, Rhodia, Tosoh Silica Co., Ltd., Solvay Japan Co., Ltd., and Tokuyama Corporation can be used.

(ii-2) Silane coupling agent

When silica is used as the filling reinforcing agent, the rubber composition preferably contains a silane coupling agent together with silica. The silane coupling agent is not particularly limited, and examples thereof include sulfide based such as bis (3-triethoxysilylpropyl) tetrasulfide, bis (2-triethoxysilylethyl) tetrasulfide, bis (4-triethoxysilylbutyl) tetrasulfide, bis (3-trimethoxysilylpropyl) tetrasulfide, bis (2-trimethoxysilylethyl) tetrasulfide, bis (2-triethoxysilylethyl) trisulfide, bis (4-trimethoxysilylbutyl) trisulfide, bis (3-triethoxysilylpropyl) disulfide, bis (2-triethoxysilylethyl) disulfide, bis (4-triethoxysilylbutyl) disulfide, bis (3-trimethoxysilylpropyl) disulfide, bis (2-trimethoxysilylethyl) ) disulfide, bis (4-trimethoxysilylbutyl) disulfide, 3-trimethoxysilylpropyl-N,N-dimethylthiocarbamoyltetrasulfide, 2-triethoxysilylethyl-N,N-dimethylthiocarbamoyltetrasulfide and 3- triethoxysilylpropyl ethacrylate monosulfide;

mercapto based such as 3-mercaptopropyltrimethoxysilane, 2-mercaptoethyltriethoxysilane and NXT and NXT-Z manufactured by Momentive;
vinyl based such as vinyl triethoxysilane and vinyl trimethoxysilane; amino based such as 3-aminopropyltriethoxysilane and 3-aminopropyltrimethoxysilane;
glycidoxy based such as γ-glycidoxypropyltriethoxysilane and γ-glycidoxypropyltrimethoxysilane;
nitro-based such as 3-nitropropyltrimethoxysilane and 3-nitropropyltriethoxysilane; and
chloro-based such as 3-chloropropyltrimethoxysilane and 3-chloropropyltriethoxysilane. These may be used alone or in combination of two or more.

As the silane coupling agent, for example, products manufactured by Degussa, Momentive, Shinetsu Silicone Co., Ltd., Tokyo Chemical Industry Co., Ltd., Azumax Co., Ltd., Toray Dow Corning Co., Ltd. can be used.

The content of the silane coupling agent is, for example, more than 3 parts by mass and less than 25 parts by mass with respect to 100 parts by mass of silica.

(iii) Other fillers

In addition to the above-mentioned carbon black and silica, the rubber composition may further contain other fillers, for example, graphite, calcium carbonate, talc, alumina, clay, aluminum hydroxide, and mica, which are generally used in the tire industry. Contents of them are, for example, more than 0.1 part by mass and less than 200 parts by mass with respect to 100 parts by mass of the rubber component.

(b2) Plasticizer component

The rubber composition may contain oil (including extending oil), liquid rubber, and a resin as a plasticizer as a component for softening the rubber. The plasticizer component is a component that can be extracted from the vulcanized rubber with acetone. The total content of the plasticizer component is, for example, preferably 40 parts by mass or more and 100 parts by mass or less, and more preferably 50 parts by mass or more and 90 parts by mass or less with respect to 100 parts by mass of the rubber component in the outer cap rubber layer. On the other hand, in the inner cap rubber layer, it is preferably 25 parts by mass or more and 80 parts by mass or less, and more preferably 45 parts by mass or more and 70 parts by mass or less. The oil content also includes the amount of oil contained in rubber (oil-extended rubber).

(i) Oil

Examples of the oil include mineral oil (generally referred to as process oil), vegetable oil and fat, and a mixture thereof. As the mineral oil (process oil), for example, paraffin-based process oil, aroma-based process oil, naphthen-based process oil and the like can be used. Examples of vegetable oils and fats include castor oil, cottonseed oil, flaxseed

oil, canola oil, soybean oil, palm oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, and tung oil. These may be used alone or in combination of two or more. Further, from the viewpoint of life cycle assessment, waste oil after being used as a lubricant for a mixer for rubber mixing, an automobile engine, or the like, waste cooking oil, or the like may be appropriately used.

Specific examples process oils (mineral oils) include products of Idemitsu Kosan Co., Ltd., Sankyo Yuka Kogyo Co., Ltd., Japan Energy Co., Ltd., Orisoi Co., Ltd., H & R Co., Ltd., Toyokuni Oil Co., Ltd., Showa Shell Sekiyu Co., Ltd., Fuji Kosan Co., Ltd. and the like.

(ii) Liquid rubber

The liquid rubber mentioned as a plasticizer is a polymer in a liquid state at room temperature (25 °C), and is a rubber component that can be extracted from a tire after vulcanization by acetone extraction. Examples of the liquid rubber include farnesene-based polymers, liquid diene-based polymers, and hydrogenated product thereof.

The farnesene-based polymer is a polymer obtained by polymerizing farnesene, and has a structural unit based on farnesene. Farnesene includes isomers such as α-farnesene ((3E, 7E)-3,7,11-trimethyl-1,3,6,10-dodecatriene) and β-farnesene (7,11-dimethyl-3-methylene-1, 6, 10-dodecatriene), and the like.

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene-equivalent value measured by gel permeation chromatography (GPC).

The content of the liquid rubber (total content of the liquid farnesene polymer, the liquid diene polymer, etc.) is, for example, more than 1 part by mass and less than 100 parts by mass with respect to 100 parts by mass of the rubber component.

As the liquid rubber, products manufactured by, for example, Kuraray Co., Ltd. and Clay Valley Co., Ltd. can be used.

(iii) Resin component

The resin component also functions as an adhesive-imparting component and may be solid or liquid at room temperature. Specific examples of the resin components include rosin-based resin, styrene-based resin, and kumaron-based resin, terpene-based resin, C5 resin, C9 resin, C5C9 resin, and acrylic resin. Two or more kinds of them may be used in combination. The content of the resin component is preferably more than 2 parts by mass and less than 45 parts by mass, and more preferably less than 30 parts by mass, with respect to 100 parts by mass of the rubber component. If necessary, these resin components may be provided with a modifying group capable of reacting with silica or the like.

The rosin-based resin is a resin containing rosin acid as a main component, which is obtained by processing pine fat. This rosin-based resin (rosins) can be classified according to the presence or absence of modification, and can be classified into non-modified rosin (unmodified rosin) and rosin-modified form (rosin derivative). Examples of the non-modified rosins include tall rosins (also known as tall oil rosins), gum rosins, wood rosins, asymmetric rosins, polymerized rosins, hydrogenated rosins, and other chemically modified rosins. The rosin-modified form is a modified form of unmodified rosin, and examples thereof include rosin esters, unsaturated carboxylic acid-modified rosins, unsaturated carboxylic acid-modified rosin esters, rosin amide compounds, and rosin amine salts.

The styrene-based resin is a polymer using a styrene-based monomer as a constituent monomer, and examples thereof include a polymer obtained by polymerizing a styrene-based monomer as a main component (50% by mass or more). Specific examples thereof include a homo-polymer obtained by independently polymerizing each of styrene-based monomers, such as styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene and p-chlorostyrene, a copolymer obtained by copolymerizing two or more types of styrene-based monomers, and a copolymer obtained by copolymerizing a styrene-based monomer and another monomer that can be copolymerized with the styrene-based monomer.

Examples of the other monomer include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene and isoprene; olefins such as 1-butene and 1-pentene; and α, β-unsaturated carboxylic acids such as maleic anhydride and acid anhydrides thereof.

Among the kumaron-based resins, the kumaron inden resin is preferable. The kumaron inden resin is a resin containing kumaron and inden as monomer components constituting the skeleton (main chain) of the resin. Examples of

the monomer component contained in the skeleton other than kumaron and indene include styrene, α-methylstyrene, methylindene, vinyltoluene and the like.

The content of the kumaron indene resin is, for example, more than 1.0 part by mass and less than 50.0 parts by mass with respect to 100 parts by mass of the rubber component.

The hydroxyl value (OH value) of the Kumaron indene resin is, for example, more than 15 mgKOH/g and less than 150 mgKOH/g. The OH value is the amount of potassium hydroxide, expressed in milligrams, required to neutralize acetic acid bonded to a hydroxyl group when 1 g of the resin is acetylated, and is a value measured by potentiometric titration (JIS K 0070: 1992).

The softening point of the Kumaron indene resin is, for example, more than 30 °C and less than 160 °C. The softening point is the temperature at which the ball drops when the softening point defined in JIS K 6220-1: 2001 is measured by a ring-ball type softening point measuring device.

Examples of the terpene-based resin include polyterpenes, terpene phenols, and aromatic-modified terpene resins.

Polyterpenes are resins obtained by polymerizing a terpene compound, and hydrogenated products thereof. Terpene compounds are hydrocarbons represented by a composition of $(C_5H_8)n$ or their oxygenated derivatives, and are compounds having a terpene, classified in monoterpenes ($C_{10}H_{16}$), sesquiterpene ($C_{15}H_{24}$), diterpenes ($C_{20}H_{32}$), or the like., as a basic skeleton. Examples thereof include α-pinene, β-pinene, dipentene, limonene, myrcene, alooshimen, ocimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins, such as α-pinene resin, β-pinene resin, limonene resin, dipentene resin, and β-pinene/limonene resin, made from the above-mentioned terpene compound, and hydrogenated terpene resin obtained by hydrogenating the terpene resin. Examples of the terpene phenol include a resin obtained by copolymerizing the above-mentioned terpene compound and a phenol-based compound, and a resin obtained by hydrogenating the resin. Specifically, a resin obtained by condensing the above-mentioned terpene compound, phenol based compound and the formalin can be mentioned. Examples of the phenol based compound include phenol, bisphenol A, cresol, xylenol and the like. Examples of the aromatic-modified terpene resin include a resin obtained by modifying the terpene resin with an aromatic compound, and a resin obtained by hydrogenating the resin. The aromatic compound is not particularly limited as long as it has an aromatic ring, but for example, phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthol; styrene derivatives such as styrene, alkylstyrene, alkoxystyrene, and unsaturated hydrocarbon group-containing styrene; kumaron; indene; and the like can be mentioned.

The "C5 resin" refers to a resin obtained by polymerizing a C5 fraction. Examples of the C5 fraction include petroleum distillates having 4 to 5 carbon atoms such as cyclopentadiene, pentene, pentadiene, and isoprene. As the C5 resin, a dicyclopentadiene resin (DCPD resin) is preferably used.

The "C9 resin" refers to a resin obtained by polymerizing a C9 fraction, and the resin may be hydrogenated or modified. Examples of the C9 fraction include petroleum fractions having 8 to 10 carbon atoms such as vinyltoluene, alkylstyrene, indene, and methyl indene. As a specific example, a kumaron indene resin, a kumaron resin, an indene resin, and an aromatic vinyl-based resin, and the like, can be mentioned and are preferably used. As the aromatic vinyl resin, a homopolymer of α-methylstyrene or styrene and a copolymer of α-methylstyrene and styrene are preferable because they are economical, easy to process, and excellent in heat generation. A copolymer of α-methylstyrene and styrene is more preferable. As the aromatic vinyl-based resin, for example, those commercially available from Clayton, Eastman Chemical, etc. can be used.

The "C5C9 resin" refers to a resin obtained by copolymerizing the C5 fraction and the C9 fraction. The resin may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited. For example, a solvent-free acrylic resin can be used.

As the solvent-free acrylic resin, a (meth) acrylic resin (polymer), synthesized by a high-temperature continuous polymerization method (high-temperature continuous lump polymerization method) (described in USP4,414,370, JP-A-S59-6207, JP-B-H5-58005, JP-A-H1-313522, USP5,010,166, Toagosei Annual Report TREND2000 No. 3, pp42-45, etc. without using polymerization initiators, chain transfer agents, organic solvents, etc. as auxiliary raw materials as much as possible, can be mentioned. Note that, "(meth) acrylic" means meth acrylic and acrylic, いn the present disclosure.

Examples of the monomer component constituting the acrylic resin include (meta) acrylic acid derivatives such as (meth) acrylic acid, (meth) acrylic acid ester (alkyl ester, aryl ester, aralkyl ester, etc.), (meth) acrylamide, and (meth) acrylamide derivative.

In addition, as the monomer component constituting the acrylic resin, an aromatic vinyl compound such as styrene, α-methylstyrene, vinyltoluene, vinylnaphthalene, divinylbenzene, trivinylbenzene, divinylnaphthalene, and the

like can be used, together with (meth) acrylic acid and/or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group or the like.

As the resin component, for example, a product manufactured by Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Nippon Catalyst Co., Ltd., JX Energy Co., Ltd., Arakawa Chemical Industry Co., Ltd., Taoka Chemical Industry Co., Ltd., etc., can be used.

(b3) Stearic acid

The rubber composition preferably contains stearic acid. The content of stearic acid is, for example, more than 0.5 parts by mass and less than 10.0 parts by mass with respect to 100 parts by mass of the rubber component. As the stearic acid, conventionally known ones can be used, and for example, products manufactured by NOF Corporation, Kao Corporation, Fujifilm Wako Pure Chemical Industries, Ltd., or Chiba Fatty Acid Co., Ltd. can be used.

(b4) Anti-aging agent

It is preferable that the rubber composition contains an anti-aging agent. The content of the anti-aging agent is, for example, more than 0.5 parts by mass and less than 10 parts by mass, and preferably 1 part by mass or more with respect to 100 parts by mass of the rubber component.

Examples of the anti-aging agent include naphthylamine-based anti-aging agents such as phenyl-$\alpha$-naphthylamine; diphenylamine-based anti-aging agents such as octylated diphenylamine and 4,4'-bis ($\alpha$, $\alpha$'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N, N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, and styrenated phenol; and bis, tris, polyphenolic anti-aging agent such as tetrakis-[methylene-3-(3',5'-di-t-butyl-4'-hydroxyphenyl) propionate] methane. These may be used alone or in combination of two or more.

As the anti-aging agent, for example, products manufactured by Seiko Chemical Co., Ltd., Sumitomo Chemical Co., Ltd., Ouchi Shinko Chemical Industry Co., Ltd., Flexis Co., Ltd., ect. can be used.

(b5) Wax

It is preferable that the rubber composition contains a wax. The content of the wax is, for example, 0.5 to 20 parts by mass, preferably 1.0 to 15 parts by mass, and more preferably 1.5 to 10 parts by mass with respect to 100 parts by mass of the rubber component.

The wax is not particularly limited, and examples thereof include petroleum wax such as paraffin wax and microcrystalline wax; natural wax such as plant wax and animal wax; and synthetic wax such as a polymer including ethylene and propylene. These may be used alone or in combination of two or more.

As the wax, for example, products manufactured by Ouchi Shinko Kagaku Kogyo Co., Ltd., Nippon Seiro Co., Ltd., and Seiko Kagaku Co., Ltd., etc., can be used.

(b6) Zinc oxide

The rubber composition may contain zinc oxide. The content of zinc oxide is, for example, more than 0.5 parts by mass and less than 10 parts by mass with respect to 100 parts by mass of the rubber component. Conventionally known zinc oxide can be used. For example, products manufactured by Mitsui Metal Mining Co., Ltd., Toho Zinc Co., Ltd., HakusuiTech Co., Ltd., Shodo Chemical Industry Co., Ltd., Sakai Chemical Industry Co., Ltd., etc., can be used.

(b7) Crosslinking agent and vulcanization accelerator

The rubber composition preferably contains a cross-linking agent such as sulfur. The content of the cross-linking agent is, for example, more than 0.1 part by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur, and soluble sulfur which are commonly used in the rubber industry. These may be used alone or in combination of two or more.

As the sulfur, for example, products manufactured by Tsurumi Chemical Industry Co., Ltd., Karuizawa Sulfur Co., Ltd., Shikoku Chemicals Corporation, Flexis Co., Ltd., Nippon Kanryu Industry Co., Ltd., Hosoi Chemical Industry Co., Ltd., etc., can be used.

Examples of the cross-linking agent other than sulfur include a vulcanizing agent containing sulfur atoms such as Tackilol V200 manufactured by Taoka Chemical Industry Co., Ltd., and KA9188 (1,6-bis (N, N'-dibenzylthiocarbamoyldithio) hexane) manufactured by Rankses, and an organic peroxide such as dicumyl peroxide.

The rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include thiazole-based vulcanization accelerators such as 2-mercaptobenzothiazole, di-2-benzothiazolyl disulfide, and N-cyclohexyl-2-benzothiadylsulfenamide; thiuram-based vulcanization accelerators such as tetramethylthiuram disulfide (TMTD), tetrabenzyltiuram disulfide (TBzTD), and tetrakis (2-ethylhexyl) thiuram disulfide (TOT-N); sulfenamide-based vulcanization accelerators such as N-cyclohexyl-2-benzothiazolesulfenamide, N-t-butyl- 2-benzothiazolyl sulfen amide, N-oxyethylene-2-benzothiazole sulfen amide, N-oxyethylene-2 -benzothiazole sulfen amide, and N, N'-diisopropyl-2-benzothiazole sulfen amide; guanidine-based vulcanization accelerators such as diphenylguanidine, di-o-tolylguanidine, and o-tolylbiguanidine can be mentioned. These may be used alone or in combination of two or more.

(b8) Others

In addition to the above components, the rubber composition may further contain additives generally used in the tire industry, such as fatty acid metal salts, carboxylic acid metal salts, organic peroxides, and anti-reversion (vulcanization return) inhibitors, if necessary. The content of these additives is, for example, more than 0.1 part by mass and less than 200 parts by mass with respect to 100 parts by mass of the rubber component.

(2) Preparation of rubber composition

Each rubber composition forming the outer cap rubber layer and the inner cap rubber layer is appropriately adjusted with the above-mentioned various compounding materials, and is produced by a general method, for example, by a manufacturing method including a base kneading step of kneading a rubber component with a filler such as carbon black or silica, and a finish kneading step of kneading the kneaded product obtained in the base kneading step and a cross-linking agent.

The kneading can be performed using a known (sealed) kneader such as a banbury mixer, a kneader, or an open roll.

The kneading temperature in the base kneading step is, for example, higher than 50 °C and lower than 200 °C, and the kneading time is, for example, more than 30 seconds and less than 30 minutes. In the base kneading process, in addition to the above components, compounding agents conventionally used in the rubber industry, such as softeners, for example oil, zinc oxide, anti-aging agents, waxes, vulcanization accelerators, etc., are appropriately added as necessary.

In the finish kneading step, the kneaded product obtained in the base kneading step and the cross-linking agent are kneaded. The kneading temperature in the finish kneading step is, for example, above room temperature and lower than 80 °C, and the kneading time is, for example, more than 1 minute and less than 15 minutes. In the finish kneading step, in addition to the above components, a vulcanization accelerator, zinc oxide and the like may be appropriately added and kneaded as needed.

2. Tire manufacturing

The tire can be manufactured as an unvulcanized tire by molding the two types of rubber compositions obtained above into a tread rubber having a predetermined shape as an outer cap rubber layer and an inner cap rubber layer, and then molding the rubber compositions together with other tire members on a tire molding machine by a usual method.

Specifically, an inner liner as a member to ensure the airtightness of the tire, a carcass as a member to withstand the load, impact and filling air pressure that the tire receives, a belt member as a member to strongly tighten the carcass to increase the rigidity of the tread, etc., are wound on a molded drum, then both ends of the carcass are fixed to both side edges and a bead part as a member for fixing the tire to the rim is arranged to form a toroid shape, followed by pasting a tread to the central portion of the outer circumference and pasting a sidewall to configure side portion. Thus, an unvulcanized tire is manufactured.

Then, the produced unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes and less than 15 minutes.

The above tires can be suitably used as tires for passenger car, tires for large passenger car, tires for large SUV, tires for truck/bus, tires for two-wheeled vehicle, tires for competition, studless tires (winter tires), all-season tires, run-flat tires, tires for aircraft. , tires for mining, and the like, and particularly preferably used as tires for passenger car.

[EXAMPLE]

Hereinafter, the present invention will be described in more detail with reference to Examples. In this example, a tire having a tire size of 225/45R18 was produced and evaluated.

1. Manufacture of rubber compositions

First, a rubber composition for forming an outer cap rubber layer located on the outside of the vehicle and a rubber composition for forming an inner cap rubber layer located on the inside of the vehicle when mounted on a vehicle was manufactured.

(1) Compounding material

First, each compounding material shown below was prepared.

(a) Rubber component

(a1) NR: TSR20
(a2) SBR-1: Modified S-SBR obtained by the method shown in the next paragraph. (styrene content: 25% by mass, vinyl bond content: 59 mol%, 25% oil-extended product)
(a3) SBR-2: HPR840 manufactured by JSR Corporation
(styrene content: 10%, vinyl bond content: 42 mol%, non-oil-extended product)
(a4) SBR-3: SLR6430 (S-SBR) manufactured by Trinseo.
(styrene content: 40% by mass, vinyl bond content: 18 mol%, 37.5% oil-extended product)
(a5) SBR-4: Toughden 4850 (unmodified S-SBR) manufactured by Asahi Kasei Corporation.
(Styrene content: 40% by mass, vinyl bond content: 46 mol%, 50% oil-extended product)
(a6) BR: Ubepole BR150B (Hicis BR) manufactured by Ube Kosan Co., Ltd. (cis content 97% by mass, trans content 2% by mass, vinyl bond content 1% by mass)

(Manufacturing of SBR-1)

The above SBR-1 was produced according to the following procedure. First, two autoclaves having an internal volume of 10 L, equipped with an inlet at the bottom, an outlet at the head, a stirrer and a jacket were connected in series as a reactor, and butadiene, styrene, and cyclohexane were mixed at predetermined ratios. This mixed solution was passed through a dehydration column filled with active alumina, mixed with n-butyllithium in a static mixer to remove impurities. Then, the mixed solution was continuously supplied from the bottom of the first reactor, and further 2,2-bis (2-oxolanyl) propane as a polar substance and n-butyllithium as a polymerization initiator were continuously supplied from the bottom of the first reactor at a predetermined rate. The temperature inside the reactor was kept at 95 °C. The polymer solution was continuously withdrawn from the reactor head and supplied to the second reactor. The temperature of the second reactor was kept at 95 °C, and a mixture of tetraglycidyl-1,3-bisaminomethylcyclohexane (monomer) as a modifying agent and an oligomer component was diluted 1000-fold with cyclohexane and continuously added at a predetermined rate to carry out the modification reaction. Thereafter, this polymer solution was continuously withdrawn from the reactor, and antioxidants were continuously added with a static mixer. Then, 25 parts by mass of extending oil NC140 manufactured by Japan Energy with respect to 100 parts by mass of the polymer was added to this polymer solution. After mixing, the solvent was removed to obtain the desired oil-extended diene based polymer (SBR-1).

The vinyl bond amount (unit: mol%) of the obtained SBR-1 was determined by infrared spectroscopic analysis from the absorption intensity near the absorption peak of the vinyl group, 910 $cm^{-1}$. The styrene content (unit: mass%) was determined from the refractive index according to JIS K6383 (1995).

(b) Compounding materials other than rubber components

(b1) Carbon Black-1: Show Black N134 manufactured by Cabot Japan Co., Ltd. (CTAB specific surface area: 135 $m^2/g$)
(b2) Carbon Black-2: Show Black N220 manufactured by Cabot Japan Co., Ltd. (CTAB specific surface area: 111 $m^2/g$)
(b3) Silica: Ultrasil VN3 manufactured by Evonik Degussa ($N_2SA$: 175$m^2/g$)
(b4) Silane coupling agent: Si998 manufactured by Nanjing Shuguang Chemical (Bis-(3-triethoxysilylpropyl)disulfide)
(b5) Resin: SYLVATRAXX4401 manufactured by Arizona Chemical Co., Ltd. ($\alpha$-methylstyrene resin)
(b6) Oil: Diana Process AH-24 (aroma oil) manufactured by Idemitsu Kosan Co., Ltd.
(b7) Liquid SBR: RICON100 manufactured by Cray valley (random copolymer, styrene content: 25% by mass, vinyl bond content: 70%, Mn: 4500)
(b8) Liquid BR: Kuraprene LBR-302 (Mn: 5500) manufactured by Kuraray Co., Ltd.
(b9) Stearic acid: Beaded stearic acid "TSUBAKI" manufactured by NOF Corporation
(b10) Anti-aging agent: Antigen 6C manufactured by Sumitomo Chemical Co., Ltd. (N-(1,3-dimethylbutyl)-N'-phenyl-p-phenylenediamine)
(b11) Wax: Sunknock N manufactured by Ouchi Shinko Kagaku Kogyo Co., Ltd.
(b12) Zinc oxide: 2 types of zinc oxide manufactured by Mitsui Mining & Smelting Co., Ltd.
(b13) Sulfur: Powdered sulfur manufactured by Tsurumi Chemical Industry Co., Ltd. (containing 5% oil)
(b14) Vulcanization accelerator-1: Noxeller CZ manufactured by Ouchi Shinko Kagaku Kogyo Co., Ltd. (N-cyclohexyl-2-benzothiadylsulfenamide (CBS))
(b15) Vulcanization accelerator-2: Soxinol D (DPG) manufactured by Sumitomo Chemical Co., Ltd. (N, N'-diphenylguanidine)

(2) Production of rubber compositions forming the outer cap rubber layer and the inner cap rubber layer

Materials other than sulfur and the vulcanization accelerator were kneaded under the condition of 150 °C for 5 minutes using a banbury mixer according to each formulation shown in Tables 1 to 3 to obtain a kneaded product. Note, each compounding amount is a mass part.

Next, sulfur and a vulcanization accelerator were added to the obtained kneaded product, and the result composition was kneaded for 5 minutes under the condition of 80 °C using an open roll to obtain a rubber composition for forming the outer cap rubber layer and the inner cap rubber layer.

2. Tire manufacturing

Using each of the obtained rubber compositions, the outer cap rubber layer and the inner cap rubber layer were formed into a predetermined shape by extrusion molding so that the boundary surface between the outer cap rubber layer and the inner cap rubber layer was formed at a position inside from the equatorial plane and between the inner ground contact end of the cap rubber layer and the equatorial plane as shown in FIG. 1, and the tread portion was formed.

The divided position (%) shown in Tables 1 to 3 is (distance from the equatorial plane to the divided position/-distance from the equatorial plane to the ground contact end), and plus indicates that the division interface is inside the vehicle from the equatorial plane when mounted on the vehicle, while minus indicates that the division interface is outside the vehicle from the equatorial plane when mounted on the vehicle.

Then, it is pasted together with other tire members to form an unvulcanized tire, and press-vulcanized for 10 minutes under the condition of 170 °C to manufacture test tires for Examples 1 to 14 shown in Tables 1 and 2, and test tires for Comparative Examples 1 to 10 shown in Table 3. In Examples 9 to 14, test tires of externally pasted apex type were manufactured.

The rubber compositions used for the externally pasted apex and for the bead apex are the same in the respective comparative examples and examples, and the distances from the lower end portion of the bead portion to the tip of the bead apex and to the tip of the externally pasted apex are 35% of the cross-sectional height.

3. Parameter calculation

Then, using each of the obtained test tires, based on the method described in "1. Overview", "[1] Features of the tire" mentioned above for each of the outer cap rubber layer and the inner cap rubber layer, the ground contact area ratios $L_{OUT}$ and $L_{IN}$ were measured. Using the test pieces cut out from each of the outer cap rubber layer and the inner cap rubber layer, the sulfur content (mass%) $TS_{OUT}$ and $TS_{IN}$ in the test piece were obtained by the oxygen combustion flask method based on JIS K6233.

In addition, a viscoelasticity measurement sample with a size of 20 mm in length $\times$ 4 mm in width $\times$ 1 mm in

thickness was collected from the outer cap rubber layer so that the tire circumference direction was the long side, and using "Iplexer (registered trademark)" manufactured by GABO, tan δ was measured from -50 °C to 5 °C under the conditions of frequency: 10 Hz, initial strain: 2%, amplitude: ± 1% and temperature rise rate: 2 °C/min. The temperature corresponding to the largest tan δ value (tan δ peak temperature) in the obtained temperature distribution curve was determined as $Tg_{OUT}$.

In addition, $[(C_{OUT} \times L_{OUT}) - (C_{IN} \times L_{IN})]$ was calculated.

The results are shown in Tables 1 to 3.

4. Performance evaluation test (evaluation of grip performance during high-speed turning)

Each test tire was attached to all wheels of the vehicle (domestic FF vehicle, displacement 2000cc), filled with air so that the internal pressure becomes 250 kPa (regular internal pressure of the passenger car), and then the vehicle ran at 100 km/h, on the test course on the dry road surface. Each of the 20 drivers sensory-evaluated the cornering performance on a 5-point scale (the larger the value, the better) when the vehicle entered a corner. Then, the total score of the evaluation by 20 drivers was calculated.

Next, the result in Comparative Example 10 was set to 100, and the the score of the evaluation was indexed based on the following formula to evaluate the grip performance during high-speed turning.

The larger the value, the better the grip performance during high-speed turning. The results are shown in Tables 1 to 3.

$$\text{Grip performance during high-speed turning} = [(\text{Result of test tire})/(\text{Result of Comparative Example 10})] \times 100$$

[Table 1]

| | Example 1 | Example 2 | Example 3 | Example 4 | Example 5 | Example 6 | Example 7 |
|---|---|---|---|---|---|---|---|
| Outer cap ru bber layer | | | | | | | |
| SBR-1 | 93.75 | - | - | - | - | - | - |
| SBR-2 | - | 75 | 75 | 75 | 75 | 75 | 75 |
| NR | - | - | - | - | - | - | - |
| BR | 25 | 25 | 25 | 25 | 25 | 25 | 25 |
| CB-1 | - | - | 80 | 100 | 125 | 125 | 125 |
| CB-2 | 80 | 80 | - | - | - | - | - |
| Resin | 20 | 25 | 25 | 30 | 30 | 30 | 30 |
| Oil | 6.25 | 20 | 20 | 20 | 30 | 30 | 30 |
| Liquid SBR | - | - | - | - | - | - | - |
| Stearic acid | 2 | 2 | 2 | 2 | 2 | 2 | 2 |
| Anti-aging agents | 2 | 2 | 2 | 2 | 2 | 2 | 2 |
| WAX | 2 | 2 | 2 | 2 | 2 | 2 | 2 |
| Zinc oxide | 2 | 2 | 2 | 2 | 2 | 2 | 2 |
| Sulfur | 2.5 | 2.5 | 2.5 | 2.5 | 2.5 | 2.5 | 2.5 |
| Vulcanization accelerator-1 | 4 | 4 | 4 | 4 | 4 | 4 | 4 |
| Styrene content in rubber components (%) | 19 | 8 | 8 | 8 | 8 | 8 | 8 |
| $AE_{OUT}$ | 21.3 | 21.3 | 21.3 | 21.2 | 22.0 | 22.0 | 22.0 |

(continued)

| | Example 1 | Example 2 | Example 3 | Example 4 | Example 5 | Example 6 | Example 7 |
|---|---|---|---|---|---|---|---|
| Outer cap ru bber layer | | | | | | | |
| $Tg_{OUT}$ (°C) | -17 | -16 | -16 | -14 | -14 | -14 | -14 |
| $TS_{OUT}$ (%) | 1.33 | 1.33 | 1.36 | 1.36 | 1.09 | 1.09 | 1.09 |
| Inner cap rubber layer | | | | | | | |
| NR | - | - | - | - | - | - | - |
| SBR-4 | 120 | 120 | 120 | 120 | 120 | 120 | 120 |
| BR | 20 | 20 | 20 | 20 | 20 | 20 | 20 |
| CB-2 | 20 | 20 | 20 | 20 | 20 | 20 | 20 |
| Silica | 80 | 80 | 80 | 80 | 80 | 80 | 80 |
| Silane coupling agent | 6.4 | 6.4 | 6.4 | 6.4 | 6.4 | 6.4 | 6.4 |
| Resin | 5 | 5 | 5 | 5 | 5 | 5 | 5 |
| Oil | 5 | 5 | 5 | 5 | 5 | 5 | 5 |
| Liquid BR | - | - | | - | - | - | - |
| Stearic acid | 2 | 2 | 2 | 2 | 2 | 2 | 2 |
| Anti-aging agents | 2 | 2 | 2 | 2 | 2 | 2 | 2 |
| WAX | 2 | 2 | 2 | 2 | 2 | 2 | 2 |
| Zinc oxide | 2 | 2 | 2 | 2 | 2 | 2 | 2 |
| Sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |
| Vulcanization accelerator-2 | 2 | 2 | 2 | 2 | 2 | 2 | 2 |
| $TS_{IN}$ (%) | 1.06 | 1.06 | 1.06 | 1.06 | 1.06 | 1.06 | 1.06 |
| Divided position (%) | -30 | -30 | -30 | -30 | -30 | 10 | 25 |
| Externally Pasted Apex | Tire does not have Externally Pasted Apex | | | | | | |
| Parameter | | | | | | | |
| $TS_{OUT}$-$TS_{IN}$ | 0.27 | 0.27 | 0.30 | 0.30 | 0.03 | 0.03 | 0.03 |
| $C_{OUT}$ (%) | 33.4 | 33.4 | 33.4 | 37.8 | 41.7 | 41.7 | 41.7 |
| $C_{IN}$ (%) | 7.4 | 7.4 | 7.4 | 7.4 | 7.4 | 7.4 | 7.4 |
| $C_{OUT}$-$C_{IN}$ | 26.0 | 26.0 | 26.0 | 30.4 | 34.3 | 34.3 | 34.3 |
| $L_{OUT}$ | 0.38 | 0.38 | 0.38 | 0.38 | 0.38 | 0.55 | 0.60 |
| $L_{IN}$ | 0.62 | 0.62 | 0.62 | 0.62 | 0.62 | 0.45 | 0.40 |
| $C_{OUT} \times L_{OUT} - C_{IN} \times L_{IN}$ | 8.1 | 8.1 | 8.1 | 9.8 | 11.3 | 19.6 | 22.1 |
| Performance Evaluation | | | | | | | |
| High-speed grip performance during turns | 108 | 118 | 124 | 132 | 138 | 142 | 144 |

[Table 2]

| | Example 8 | Example 9 | Example 10 | Example 11 | Example 12 | Example 13 | Example 14 |
|---|---|---|---|---|---|---|---|
| Outer cap rubber layer | | | | | | | |
| SBR-1 | - | - | - | - | - | - | - |
| SBR-2 | 75 | 75 | 75 | 75 | 75 | 75 | 75 |
| NR | - | - | - | - | - | 10 | 10 |
| BR | 25 | 25 | 25 | 25 | 25 | 15 | 15 |
| CB-1 | 125 | 125 | 125 | 125 | 125 | 125 | 125 |
| CB-2 | - | - | - | - | - | - | - |
| Resin | 30 | 30 | 30 | 30 | 30 | 30 | 30 |
| Oil | 30 | 30 | 15 | 15 | 15 | 15 | 15 |
| Liquid SBR | - | - | 15 | 15 | 15 | 15 | 15 |
| Stearic acid | 2 | 2 | 2 | 2 | 2 | 2 | 2 |
| Anti-aging agents | 2 | 2 | 2 | 2 | 2 | 2 | 2 |
| WAX | 2 | 2 | 2 | 2 | 2 | 2 | 2 |
| Zinc oxide | 2 | 2 | 2 | 2 | 2 | 2 | 2 |
| Sulfur | 2.5 | 2.5 | 2.5 | 1.5 | 1.5 | 1.5 | 1.5 |
| Vulcanization accelerator-1 | 4 | 4 | 4 | 4 | 4 | 4 | 4 |
| Styrene content in rubber components (%) | 8 | 8 | 8 | 8 | 8 | 8 | 8 |
| $AE_{OUT}$ | 22.0 | 22.0 | 22.0 | 22.1 | 22.1 | 22.1 | 22.1 |
| $Tg_{OUT}$ (°C) | -14 | -14 | -12 | -13 | -13 | -13 | -13 |
| $TS_{OUT}$ (%) | 1.09 | 1.09 | 1.09 | 0.83 | 0.83 | 0.83 | 0.83 |
| Inner cap rubber layer | | | | | | | |
| NR | | | | | 30 | 30 | 30 |
| SBR-4 | 120 | 120 | 120 | 120 | 75 | 75 | 75 |
| BR | 20 | 20 | 20 | 20 | 20 | 20 | 20 |
| CB-2 | 20 | 20 | 20 | 20 | 20 | 20 | 20 |
| Silica | 80 | 80 | 80 | 80 | 80 | 80 | 80 |
| Silane coupling agent | 6.4 | 6.4 | 6.4 | 6.4 | 6.4 | 6.4 | 6.4 |
| Resin | 5 | 5 | 5 | 5 | 5 | 5 | 5 |
| Oil | 5 | 5 | 5 | 5 | 20 | 20 | 10 |
| Liquid BR | - | - | - | - | - | - | 10 |
| Stearic acid | 2 | 2 | 2 | 2 | 2 | 2 | 2 |
| Anti-aging agents | 2 | 2 | 2 | 2 | 2 | 2 | 2 |
| WAX | 2 | 2 | 2 | 2 | 2 | 2 | 2 |
| Zinc oxide | 2 | 2 | 2 | 2 | 2 | 2 | 2 |
| Sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |

(continued)

| | | | | | | | |
|---|---|---|---|---|---|---|---|
| Inner cap rubber layer | | | | | | | |
| Vulcanization accelerator-2 | 2 | 2 | 2 | 2 | 2 | 2 | 2 |
| $TS_{IN}$ (%) | 1.06 | 1.06 | 1.06 | 1.06 | 1.06 | 1.06 | 1.06 |
| Divided position (%) | 45 | 45 | 45 | 45 | 45 | 45 | 45 |
| Externally Pasted Apex | * | Tire has Externally Pasted Apex | | | | | |
| Parameter | | | | | | | |
| $TS_{OUT}$-$TS_{IN}$ | 0.03 | 0.03 | 0.03 | -0.23 | -0.23 | -0.23 | -0.23 |
| $C_{OUT}$ (%) | 41.7 | 41.7 | 41.7 | 41.9 | 41.9 | 41.9 | 41.9 |
| $C_{IN}$ (%) | 7.4 | 7.4 | 7.4 | 7.4 | 8.3 | 8.3 | 8.3 |
| $C_{OUT}$-$C_{IN}$ | 34.3 | 34.3 | 34.3 | 34.5 | 33.6 | 33.6 | 33.6 |
| $L_{OUT}$ | 0.75 | 0.75 | 0.75 | 0.75 | 0.75 | 0.75 | 0.75 |
| $L_{IN}$ | 0.25 | 0.25 | 0.25 | 0.25 | 0.25 | 0.25 | 0.25 |
| $C_{OUT} \times L_{OUT}$-$C_{IN} \times L_{IN}$ | 29.4 | 29.4 | 29.4 | 29.6 | 29.3 | 29.3 | 29.3 |
| Performance Evaluation | | | | | | | |
| High-speed grip performance during turns | 148 | 150 | 152 | 154 | 156 | 154 | 158 |
| * Tire does not have Externally Pasted Apex | | | | | | | |

[Table 3]

| | Comparative Example | | | | | | | | | |
|---|---|---|---|---|---|---|---|---|---|---|
| No. | 1 | 2 | 3 | 4 | 5 | 6 | 7 | 8 | 9 | 10 |
| Outer cap rubber layer | | | | | | | | | | |
| SBR-1 | | 93.75 | | | | | | | | |
| SBR-2 | 103.125 | | 103.125 | 103.125 | 103.125 | 103.125 | 103.125 | 137.5 | 137.5 | 137.5 |
| NR | | | | | | | | | | |
| BR | 25 | 25 | 25 | 25 | 25 | 25 | 25 | | | |
| CB-1 | | | | | | | 80 | 80 | 125 | 125 |
| CB-2 | 80 | 80 | 80 | 80 | 80 | 80 | | | | |
| Resin | 5 | 10 | 15 | 5 | 5 | 5 | 15 | 5 | 5 | 5 |
| Oil | 11.875 | 16.25 | 1.875 | 11.875 | 11.875 | 11.875 | 1.875 | 2.5 | 17.5 | 17.5 |
| Stearic acid | 2 | 2 | 2 | 2 | 2 | 2 | 2 | 2 | 2 | 2 |
| Anti-aging agents | 2 | 2 | 2 | 2 | 2 | 2 | 2 | 2 | 2 | 2 |
| WAX | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 |
| Sulfur | 2.5 | 2.5 | 2.5 | 2.5 | 2.5 | 2.5 | 2.5 | 2.5 | 2.5 | 1.5 |
| Vulcanization accelerator-1 | 4 | 4 | 4 | 4 | 4 | 4 | 4 | 4 | 4 | 4 |

(continued)

| | Comparative Example | | | | | | | | | |
|---|---|---|---|---|---|---|---|---|---|---|
| No. | 1 | 2 | 3 | 4 | 5 | 6 | 7 | 8 | 9 | 10 |
| Outer cap rubber layer | | | | | | | | | | |
| Styrene content in rubber components (%) | 30 | 19 | 30 | 30 | 30 | 30 | 30 | 40 | 40 | 40 |
| $AE_{OUT}$ | 21.3 | 21.3 | 21.3 | 21.3 | 21.3 | 21.3 | 21.3 | 21.3 | 22.0 | 22.1 |
| $Tg_{OUT}$ (°C) | -19 | -22 | -15 | -19 | -19 | -19 | -15 | -15 | -15 | -15 |
| $TS_{OUT}$ (%) | 1.33 | 1.33 | 1.33 | 1.33 | 1.33 | 1.33 | 1.36 | 1.36 | 1.09 | 0.83 |
| Inner cap rubber layer | | | | | | | | | | |
| SBR-4 | 120 | 120 | 120 | 120 | 120 | 120 | 120 | 120 | 120 | 120 |
| BR | 20 | 20 | 20 | 20 | 20 | 20 | 20 | 20 | 20 | 20 |
| CB-2 | 90 | 90 | 90 | 80 | 20 | 90 | 90 | 90 | 90 | 90 |
| Silica | 10 | 10 | 10 | 20 | 80 | 10 | 10 | 10 | 10 | 10 |
| Silane coupling agent | 0.8 | 0.8 | 0.8 | 1.6 | 6.4 | 0.8 | 0.8 | 0.8 | 0.8 | 0.8 |
| Resin | 5 | 5 | 5 | 5 | 5 | 5 | 5 | 5 | 5 | 5 |
| Oil | 5 | 5 | 5 | 5 | 5 | 5 | 5 | 5 | 5 | 5 |
| Stearic acid | 2 | 2 | 2 | 2 | 2 | 2 | 2 | 2 | 2 | 2 |
| Anti-aging agents | 2 | 2 | 2 | 2 | 2 | 2 | 2 | 2 | 2 | 2 |
| WAX | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 | 1.5 |
| Vulcanization accelerator-1 | 2 | 2 | 2 | 2 | 2 | 2 | 2 | 2 | 2 | 2 |
| Vulcanization accelerator-2 | 2 | 2 | 2 | 2 | 2 | 2 | 2 | 2 | 2 | 2 |
| $TS_{IN}$ (%) | 0.86 | 0.86 | 0.86 | 0.86 | 1.06 | 0.83 | 0.86 | 0.86 | 0.86 | 0.86 |
| Divided position (%) | -30 | -30 | -30 | -30 | -30 | 30 | -30 | -30 | -30 | -30 |
| Externally Pasted Apex | Tire does not have Externally Pasted Apex | | | | | | | | | |
| Parameter | | | | | | | | | | |
| $TS_{OUT}$ - $TS_{IN}$ | 0.47 | 0.47 | 0.47 | 0.47 | 0.27 | 0.50 | 0.50 | 0.50 | 0.23 | -0.03 |
| $C_{OUT}$ (%) | 33.4 | 33.4 | 33.4 | 33.4 | 33.4 | 33.4 | 33.4 | 33.4 | 41.7 | 41.9 |
| $C_{IN}$ (%) | 34.1 | 34.1 | 34.1 | 30.2 | 7.4 | 34.1 | 34.1 | 34.1 | 34.1 | 34.1 |
| $C_{OUT}$-$C_{IN}$ | -0. 7 | -0. 7 | -0. 7 | 3.2 | 26.0 | -0. 7 | -0. 7 | -0. 7 | 7.7 | 7.8 |
| $L_{OUT}$ | 0.38 | 0.38 | 0.38 | 0.38 | 0.38 | 0.62 | 0.38 | 0.38 | 0.38 | 0.38 |
| $L_{IN}$ | 0.62 | 0.62 | 0.62 | 0.62 | 0.62 | 0.38 | 0.62 | 0.62 | 0.62 | 0.62 |

(continued)

| Externally Pasted Apex | Tire does not have Externally Pasted Apex | | | | | | | | | |
|---|---|---|---|---|---|---|---|---|---|---|
| Parameter | | | | | | | | | | |
| $C_{OUT} \times L_{OUT} - C_{IN} \times L_{IN}$ | -8.4 | -8.4 | -8.4 | -6.0 | 8.1 | 7.8 | -8.4 | -8.4 | -5.3 | -5.2 |
| Performance Evaluation | | | | | | | | | | |
| High-speed grip performance during turns | 80 | 88 | 86 | 82 | 92 | 84 | 90 | 88 | 98 | 100 |

From the results shown in Tables 1 to 3, it turns out that a pneumatic tire with sufficiently improved grip performance during high-speed turning can be provided, when the outer cap rubber layer was formed by using a rubber composition containing 25% by mass or less of styrene in the rubber component and having a glass transition temperature of -18 °C or higher, and

$$C_{IN} < C_{OUT} \text{ (Formula 1)}$$

and $_{OUT} \times L_{OUT}) - (C_{IN} \times L_{IN})$ (Formula 2) are satisfied.

Further, it turns out that a pneumatic tire with further improved grip performance during high-speed turning can be provided, when the particle size of carbon black and sulfur content contained in the outer cap rubber layer are appropriately controlled, or when an externally pasted apex is provided.

Although the present invention has been described above based on the embodiments, the present invention is not limited to the above embodiments. Various modifications may be made to the above embodiments within the scope of the appended claims.

[DESCRIPTION OF THE REFERENCE NUMERALS

| | |
|---|---|
| 1 | tire |
| 2 | tread portion |
| 3 | sidewall portion |
| 4 | bead portion |
| 5 | carcass |
| 6 | inner |
| 21 | cap rubber layer |
| 21a | outer cap rubber layer |
| 21b | inner cap rubber layer |
| 22 | boundary surface |
| 23 | inner ground contact end of cap rubber layer |
| 24 | outer ground contact end of cap rubber layer |
| 25 | base rubber layer |
| 26 | belt |
| 31 | sidewall |
| 41 | bead core |
| 42 | bead Apex |
| 43 | clinch |
| 44 | chefa |
| 45 | externally pasted apex |
| C | tire equatorial plane |
| D | area |

$D_{IN}$ Distance from the inner ground contact end of the cap rubber layer to the equatorial plane

**Claims**

1. A pneumatic tire (1) that specifies the tire mounting direction when mounted on a vehicle, wherein the cap rubber layer (21) on the outermost layer of the tread (2) is divided in the tire width direction,

   the cap rubber layer located on the outside of the vehicle (21a) is formed of a rubber composition containing 25% by mass or less of styrene in the rubber component and having a glass transition temperature of -18 °C or higher, wherein the acetone-extracted content in the cap rubber layer located on the outside of the vehicle (21a) is 20% by mass or more,
   wherein the styrene content (mass%) is determined from the refractive index according to JIS K6383 (1995),
   **characterised in that**
   a content of carbon black in the rubber composition forming the cap rubber layer located inside of the vehicle (21b) is 3 to 30 parts by mass, and,
   when the carbon black content ratio is $C_{OUT}$ (mass%), and the ground contact area ratio is $L_{OUT}$, in the cap rubber layer located on the outside of the vehicle (21a), and the carbon black content ratio is $C_{IN}$ (mass%) and the ground contact area ratio is $L_{IN}$ in the cap rubber layer located inside the vehicle (21b), the following (Formula 1) and (Formula 2) are satisfied.

$$C_{IN} < C_{OUT} \qquad \text{(Formula 1)}$$

$$0 \leq (C_{OUT} \times L_{OUT}) - (C_{IN} \times L_{IN}) \qquad \text{(Formula 2)}$$

2. The pneumatic tire (1) according to Claim 1, **characterized in that** it satisfies the following (formula 3).

$$20 \leqq (C_{OUT} - C_{IN}) \qquad \text{(Formula 3)}$$

3. The pneumatic tire (1) according to Claim 2, **characterized in that** it satisfies the following (formula 4).

$$30 \leqq (C_{OUT} - C_{IN}) \qquad \text{(Formula 4)}$$

4. The pneumatic tire (1) according to any one of Claims 1 to 3, **characterized in that** it satisfies the following (formula 5).

$$0 \leqq (L_{OUT} - L_{IN}) \qquad \text{(Formula 5)}$$

5. The pneumatic tire (1) according to Claim 4, **characterized in that** it satisfies the following (formula 6).

$$0.15 \leqq (L_{OUT} - L_{IN}) \qquad \text{(Formula 6)}$$

6. The pneumatic tire (1) according to any one of Claims 1 to 5, **characterized in that** it satisfies the following (formula 7).

$$8 \leq (C_{OUT} \times L_{OUT}) - (C_{IN} \times L_{IN}) \qquad \text{(Formula 7)}$$

7. The pneumatic tire (1) according to Claim 6, **characterized in that** it satisfies the following (formula 8).

$$10 \leq (C_{OUT} \times L_{OUT}) - (C_{IN} \times L_{IN}) \qquad \text{(Formula 8)}$$

8. The pneumatic tire (1) according to any one of Claims 1 to 7, **characterized in that**, the boundary surface (22) between the cap rubber layer located on the outside of the vehicle (21a) and the cap rubber layer located on the inside of the vehicle (21b) is formed inward from the equatorial plane and at a distance of 5% or more and 80% or less of the distance from the inner ground contact end of the cap rubber layer (23) to the equatorial plane.

9. The pneumatic tire (1) according to any one of Claims 1 to 8, **characterized in that** carbon black contained in the cap rubber layer located on the outside of the vehicle (21a) has a particle size of 22 nm or less.

10. The pneumatic tire (1) according to any one of Claims 1 to 9, **characterized in that** the content of styrene-butadiene rubber is 70% by mass or more in 100 parts by mass of the rubber component contained in the cap rubber layer located on the outside of the vehicle (21a).

11. The pneumatic tire according to Claim 1, **characterized in that** the acetone-extracted content in the cap rubber layer located on the outside of the vehicle (21a) is 22% by mass or more.

12. The pneumatic tire (1) according to any one of Claims 1 to 11, **characterized in that**, when the amount of sulfur in the cap rubber layer located on the outside of the vehicle (21a) is $TS_{OUT}$ (mass%) and the amount of sulfur in the cap rubber layer located on the inside of the vehicle (21b) is $TS_{IN}$ (mass%), $TS_{OUT} < TS_{IN}$ is satisfied.

13. The pneumatic tire (1) according to any one of Claims 1 to 12, **characterized in that** an externally pasted apex (45) is provided on the outside of the carcass (5).

## Patentansprüche

1. Luftreifen (1), der die Reifenmontagerichtung, wenn an einem Fahrzeug montiert, spezifiziert, wobei

   die Deckkautschukschicht (21) auf der äußersten Schicht des Laufstreifens (2) in der Reifenbreitenrichtung unterteilt ist,
   die auf der Außenseite des Fahrzeugs befindliche Deckkautschukschicht (21a) mit einer Kautschukzusammensetzung gebildet ist, die 25 Massen-% oder weniger Styrol in der Kautschukkomponente enthält und eine Glasübergangstemperatur von -18°C oder höher aufweist,
   wobei der Aceton-extrahierte Gehalt in der auf der Außenseite des Fahrzeugs befindlichen Deckkautschukschicht (21a) 20 Massen-% oder mehr beträgt,
   wobei der Styrolgehalt (Massen-%) gemäß JIS K6383 (1995) aus dem Brechungsindex bestimmt ist,
   **dadurch gekennzeichnet, dass** ein Gehalt an Ruß in der Kautschukzusammensetzung, welche die innerhalb des Fahrzeugs befindliche Deckkautschukschicht (21b) bildet, 3 bis 30 Masseteile beträgt, und,
   wenn in der auf der Außenseite des Fahrzeugs befindlichen Deckkautschukschicht (21a) der Rußgehalt-Anteil $C_{OUT}$ (Massen-%) ist, und der Bodenkontaktflächen-Anteil $L_{OUT}$ ist, und in der innerhalb des Fahrzeugs befindlichen Deckkautschukschicht (21b) der Rußgehalt-Anteil $C_{IN}$ (Massen-%) und der Bodenkontaktflächen-Anteil $L_{IN}$ ist, die folgenden (Formel 1) und (Formel 2) erfüllt sind.

$$C_{IN} < C_{OUT} \qquad \text{(Formel 1)}$$

$$0 \leq (C_{OUT} \times L_{OUT}) - (C_{IN} \times L_{IN}) \qquad \text{(Formel 2)}$$

2. Luftreifen (1) nach Anspruch 1, **dadurch gekennzeichnet, dass** er die folgende (Formel 3) erfüllt.

$$20 \leqq (C_{OUT} - C_{IN}) \qquad \text{(Formel 3)}$$

3. Luftreifen (1) nach Anspruch 2, **dadurch gekennzeichnet, dass** er die folgende (Formel 4) erfüllt.

$$30 \leqq (C_{OUT} - C_{IN}) \qquad \text{(Formel 4)}$$

4. Luftreifen (1) nach einem der Ansprüche 1 bis 3, **dadurch gekennzeichnet, dass** er die folgende (Formel 5) erfüllt.

$$0 \leqq (L_{OUT} - L_{IN}) \qquad \text{(Formel 5)}$$

5. Luftreifen (1) nach Anspruch 4, **dadurch gekennzeichnet, dass** er die folgende (Formel 6) erfüllt.

$$0,15 \leqq (L_{OUT} - L_{IN}) \qquad \text{(Formel 6)}$$

6. Luftreifen (1) nach einem der Ansprüche 1 bis 5, **dadurch gekennzeichnet, dass** er die folgende (Formel 7) erfüllt.

$$8 \leq (C_{OUT} \times L_{OUT}) - (C_{IN} \times L_{IN}) \qquad \text{(Formel 7)}$$

7. Luftreifen (1) nach Anspruch 6, **dadurch gekennzeichnet, dass** er die folgende (Formel 8) erfüllt.

$$10 \leq (C_{OUT} \times L_{OUT}) - (C_{IN} \times L_{IN}) \qquad \text{(Formel 8)}$$

8. Luftreifen (1) nach einem der Ansprüche 1 bis 7, **dadurch gekennzeichnet, dass** die Grenzfläche (22) zwischen der auf der Außenseite des Fahrzeugs befindlichen Deckkautschukschicht (21a) und der auf der Innenseite des Fahrzeugs befindlichen Deckkautschukschicht (21b) einwärts von der Äquatorebene und in einem Abstand von 5% oder mehr und 80% oder weniger des Abstands vom inneren Bodenkontakt-Ende (23) der Deckkautschukschicht zur Äquatorebene beträgt.

9. Luftreifen (1) nach einem der Ansprüche 1 bis 8, **dadurch gekennzeichnet, dass** in der auf der Außenseite des Fahrzeugs befindlichen Deckkautschukschicht (21a) enthaltener Ruß eine Partikelgröße von 22 nm oder weniger aufweist.

10. Luftreifen (1) nach einem der Ansprüche 1 bis 9, **dadurch gekennzeichnet, dass** der Gehalt an Styrol-Butadien-Kautschuk 70 Massen-% oder mehr in 100 Massenteilen der Kautschukkomponente beträgt, die in der auf der Außenseite des Fahrzeugs befindlichen Deckkautschukschicht (21a) enthalten ist.

11. Luftreifen nach Anspruch 1, **dadurch gekennzeichnet, dass** der Aceton-extrahierte Gehalt in der auf der Außenseite des Fahrzeugs befindlichen Deckkautschukschicht (21a) 22 Massen-% oder mehr beträgt.

12. Luftreifen (1) nach einem der Ansprüche 1 bis 11, **dadurch gekennzeichnet, dass**, wenn die Menge an Schwefel in der auf der Außenseite des Fahrzeugs befindlichen Deckkautschukschicht (21a) $TS_{OUT}$ (Massen-%) ist und die Menge an Schwefel in der auf der Innenseite des Fahrzeugs befindlichen Deckkautschukschicht (21b) $TS_{IN}$ (Massen-%) ist, $TS_{OUT}<TS_{IN}$ erfüllt ist.

13. Luftreifen (1) nach einem der Ansprüche 1 bis 12, **dadurch gekennzeichnet, dass** auf der Außenseite der Karkasse (5) ein äußerlich aufgebrachter Apex (45) vorgesehen ist.

**Revendications**

1. Bandage pneumatique (1) qui spécifie la direction de montage du pneumatique quand il est monté sur un véhicule, dans lequel

   la couche de caoutchouc de chape (21) sur la couche la plus à l'extérieur de la bande de roulement (2) est divisée dans la direction de la largeur du pneumatique,
   la couche de caoutchouc de chape situé sur l'extérieur du véhicule (21a) est formée d'une composition de caoutchouc contenant 25 % en masse ou moins de styrène dans le composant de caoutchouc et ayant une température de transition vitreuse de -18 °C ou plus élevée,
   dans lequel la teneur en extrait d'acétone dans la couche de caoutchouc de chape située sur l'extérieur du véhicule (21a) est de 20 % en masse ou plus, dans lequel la teneur en styrène (%m) est déterminée à partir de l'indice de réfraction selon la norme industrielle japonaise JIS K6383 (1995),
   **caractérisé en ce que**
   une teneur en noir de carbone dans la composition de caoutchouc formant la couche de caoutchouc de chape située à l'intérieur du véhicule (21b) est de 3 à 30 parts en masse, et
   quand le rapport de teneur en noir de carbone est $C_{OUT}$ (%m), et le rapport d'aire de contact au sol est $L_{OUT}$, dans la couche de caoutchouc de chape située sur l'extérieur du véhicule (21a), et le rapport de teneur en noir de carbone est $C_{IN}$ (%m) et le rapport d'aire de contact au sol est $L_{IN}$ dans la couche de caoutchouc de chape située à l'intérieur du véhicule (21b), la (formule 1) et la (formule 2) suivantes sont satisfaites :

$$C_{IN} < C_{OUT} \quad \text{(formule 1)}$$

$$0 \leq (C_{OUT} \times L_{OUT}) - (C_{IN} \times L_{IN}) \quad \text{(formule 2)}$$

**2.** Bandage pneumatique (1) selon la revendication 1, **caractérisé en ce qu'**il satisfait la (formule 3) suivante :

$$20 \leqq (C_{OUT} - C_{IN}) \quad \text{(formule 3)}$$

**3.** Bandage pneumatique (1) selon la revendication 2, **caractérisé en ce qu'**il satisfait la (formule 4) suivante :

$$30 \leqq (C_{OUT} - C_{IN}) \quad \text{(formule 4)}$$

**4.** Bandage pneumatique (1) selon l'une quelconque des revendications 1 à 3, **caractérisé en ce qu'**il satisfait la (formule 5) suivante :

$$0 \leqq (L_{OUT} - L_{IN}) \quad \text{(formule 5)}$$

**5.** Bandage pneumatique (1) selon la revendication 4, **caractérisé en ce qu'**il satisfait la (formule 6) suivante :

$$0{,}15 \leqq (L_{OUT} - L_{IN}) \quad \text{(formule 6)}$$

**6.** Bandage pneumatique (1) selon l'une quelconque des revendications 1 à 5, **caractérisé en ce qu'**il satisfait la (formule 7) suivante :

$$8 \leq (C_{OUT} \times L_{OUT}) - (C_{IN} \times L_{IN}) \quad \text{(formule 7)}$$

**7.** Bandage pneumatique (1) selon la revendication 6, **caractérisé en ce qu'**il satisfait la (formule 8) suivante :

$$10 \leq (C_{OUT} \times L_{OUT}) - (C_{IN} \times L_{IN}) \quad \text{(formule 8)}$$

**8.** Bandage pneumatique (1) selon l'une quelconque des revendications 1 à 7, **caractérisé en ce que** la surface frontière (22) entre la couche de caoutchouc de chape située sur l'extérieur du véhicule (21a) et la couche de caoutchouc de chape située sur l'intérieur du véhicule (21b) est formée à l'intérieur du plan d'équateur et à une distance de 5 % ou plus et de 80 % ou moins de la distance depuis l'extrémité de contact au sol intérieure de la couche de caoutchouc de chape (23) jusqu'au plan d'équateur.

**9.** Bandage pneumatique (1) selon l'une quelconque des revendications 1 à 8, **caractérisé en ce que** le noir de carbone contenu dans la couche de caoutchouc de chape située sur l'extérieur du véhicule (21a) a une taille particulaire de 22 nm ou moins.

**10.** Bandage pneumatique (1) selon l'une quelconque des revendications 1 à 9, **caractérisé en ce que** la teneur en caoutchouc styrène butadiène est de 70 % en masse ou plus dans 100 parts en masse du composant de caoutchouc contenu dans la couche de caoutchouc de chape située sur l'extérieur du véhicule (21a).

**11.** Bandage pneumatique selon la revendication 1, **caractérisé en ce que** la teneur en extrait d'acétone dans la couche de caoutchouc de chape située sur l'extérieur du véhicule (21a) est de 22 % en masse ou plus.

**12.** Bandage pneumatique (1) selon l'une quelconque des revendications 1 à 11, **caractérisé en ce que**, quand la quantité de soufre dans la couche de caoutchouc de chape située sur l'extérieur du véhicule (21a) est $TS_{OUT}$ (%m) et la quantité de soufre dans la couche de caoutchouc de chape située sur l'intérieur du véhicule (21b) est $TS_{IN}$ (%m), la formule $TS_{OUT} < TS_{IN}$ est satisfaite.

**13.** Bandage pneumatique (1) selon l'une quelconque des revendications 1 à 12, **caractérisé en ce qu'**un apex collé à l'extérieur (45) est prévu sur l'extérieur de la carcasse (5).

Fig.1

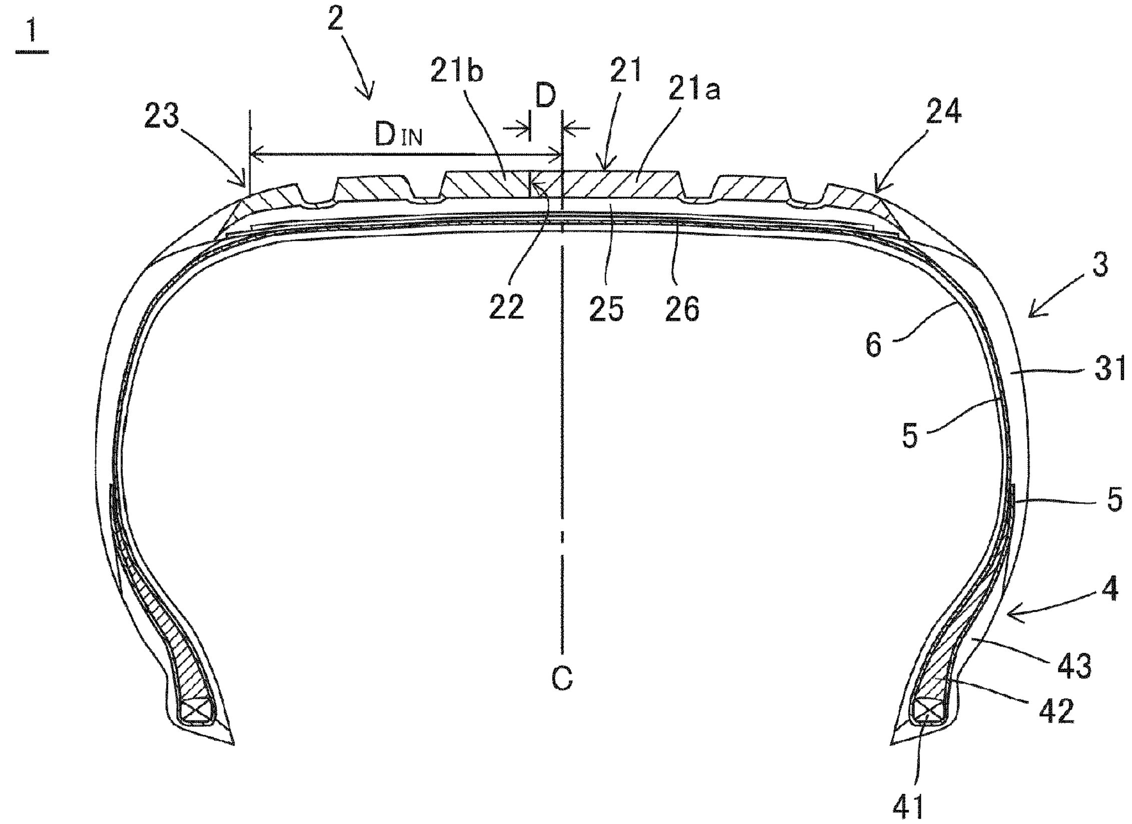

Fig.2

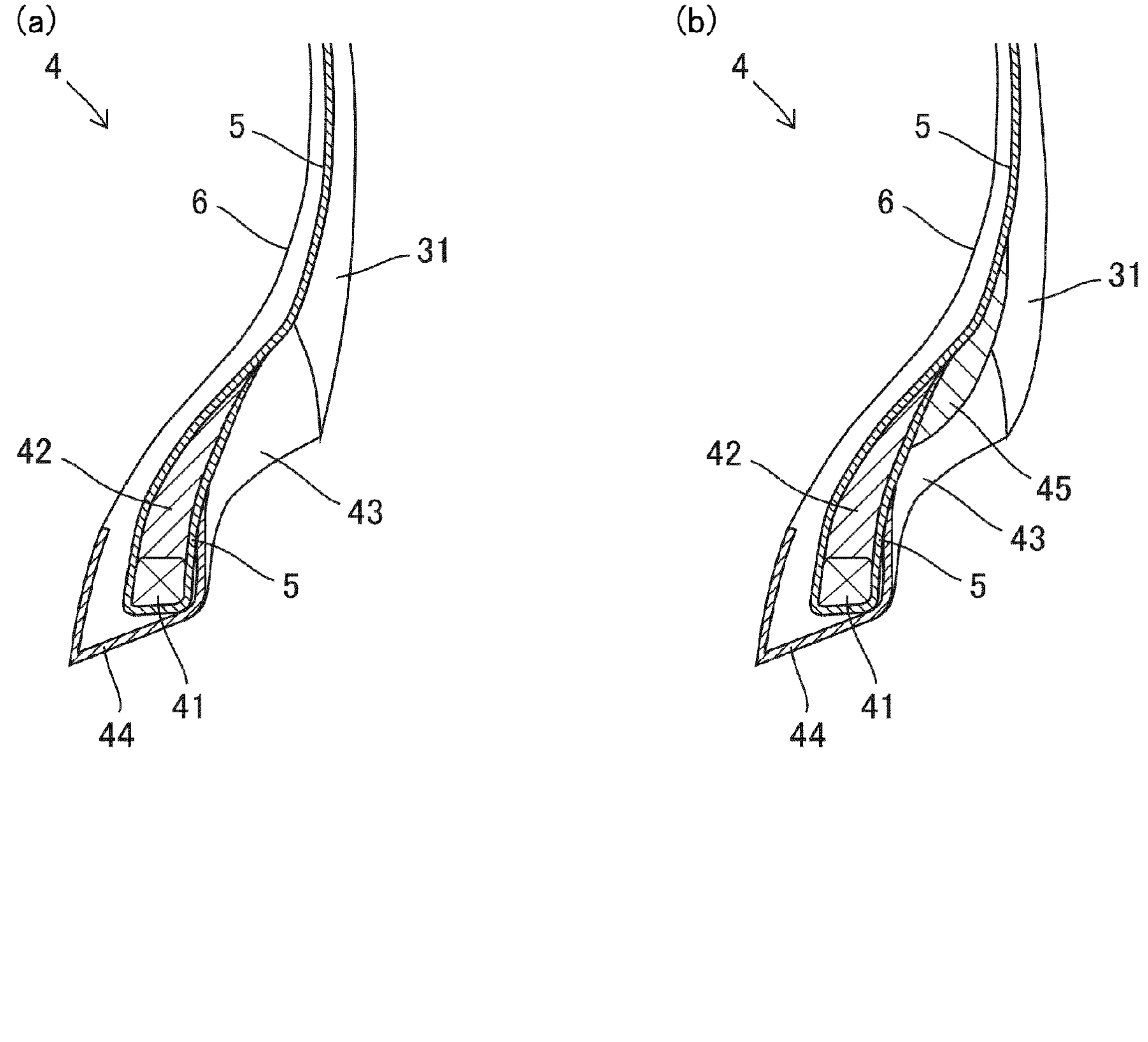

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1588575 A
- EP 1308319 A1
- EP 0864446 A1
- WO 0037270 A1
- EP 1619048 A1
- JP 2011093386 A
- JP 2013079017 A
- JP 2016037100 A
- JP 2010111753 A
- US 4414370 A
- JP S596207 A
- JP H558005 B
- JP H1313522 A
- US 5010166 A


### Non-patent literature cited in the description


- *Toagosei Annual Report TREND2000* (3), 42-45